(19)

Europäisches
Patentamt
European
Patent Office
Office européen
des brevets

(11)  **EP 4 572 508 A1**

(12)  **EUROPEAN PATENT APPLICATION**
published in accordance with Art. 153(4) EPC

(43) Date of publication:
**18.06.2025  Bulletin 2025/25**

(21) Application number: **23852826.9**

(22) Date of filing: **31.07.2023**

(51) International Patent Classification (IPC):
**H04W 74/08** (2024.01)     **H04W 72/20** (2023.01)
**H04W 72/54** (2023.01)     **H04W 72/53** (2023.01)
**H04L 5/00** (2006.01)

(52) Cooperative Patent Classification (CPC):
**H04L 5/00; H04W 72/04; H04W 72/12;
H04W 72/20; H04W 72/53; H04W 72/54;
H04W 74/08**

(86) International application number:
**PCT/KR2023/011104**

(87) International publication number:
**WO 2024/034945 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **08.08.2022  KR 20220098692**

(71) Applicant: **Innovative Technology Lab Co., Ltd.
Seocho-gu, Seoul 06744 (KR)**

(72) Inventor: **PARK, Dong Hyun
Seoul 06744 (KR)**

(74) Representative: **Diehl & Partner
Patent- und Rechtsanwaltskanzlei mbB
Erika-Mann-Straße 9
80636 München (DE)**

(54)  **METHOD AND DEVICE FOR PERFORMING SIDELINK COMMUNICATION IN WIRELESS
COMMUNICATION SYSTEM**

(57)    A method of configuring a sidelink resource pool to a user equipment (UE) in a wireless communication system may include receiving, by the UE, resource pool configuration information based on higher layer signaling from a base station; transmitting sidelink control informa-
tion to another UE based on resource pool configuration information; and performing sidelink communication with the other UE, and resource pool configuration information may be information based on sidelink resource pool configuration of an unlicensed band.

**FIG. 20**

## Description

TECHNICAL FIELD

The present disclosure relates to a method and apparatus for performing sidelink communication in a wireless communication system.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to a long term evolution (LTE)-based/New Radio (NR) based communication between vehicles, vehicle-to-pedestrian (V2P), which may refer to LTE-based/NR-based communication between a vehicle and a user equipment (UE) carried by a user, and a vehicle-to-infrastructure/network (V2I/N), which may refer to a LTE-based/NR-based communication between a vehicle and a roadside unit (RSU)/network. The RSU may be a transportation infrastructure entity configured by a base station or a fixed UE, such as, an entity that transmits a speed notification to a vehicle.

DETAILED DESCRIPTION

TECHNICAL SUBJECT

A technical subject of the present disclosure relates to a method and apparatus for performing sidelink (SL) communication in a wireless communication system.

A technical subject of the present disclosure relates to a method and apparatus for configuring an SL resource pool in an unlicensed band.

A technical subject of the present disclosure relates to a method and apparatus for configuring an SL resource pool in an unlicensed band based on a resource block set (RBS) and an interlace/subchannel.

A technical subject of the present disclosure relates to a method and apparatus for transmitting a physical sidelink control channel (PSCCH) in an SL resource pool in an unlicensed band.

A technical subject of the present disclosure relates to a method and apparatus for assigning PSCCH resources in an SL resource pool in an unlicensed band.

A technical subject of the present disclosure relates to a method and apparatus for assigning $1^{st}$ sidelink control information (SCI) and $2^{nd}$ SCI resources.

A technical subject of the present disclosure relates to a method and apparatus for assigning PSCCH resources based on a listen before talk (LBT) success status within an SL resource pool.

Technical subjects achievable from the present disclosure are not limited to the aforementioned technical subjects and still other technical subjects not described herein may be clearly understood by one of ordinary skill in the art to which the disclosure pertains from the following description.

TECHNICAL SOLUTION

A method of configuring a sidelink resource pool in a user equipment (UE) in a wireless communication system according to an aspect of the present disclosure may include receiving, by the UE, resource pool configuration information based on higher layer signaling from a base station; verifying a channel occupancy success status of at least one resource block sets (RBSs) within a resource pool based on the resource pool configuration information; performing physical sidelink control channel (PSCCH) transmission by assigning PSCCH resources within the at least one RBS based on the channel occupancy success status; and performing sidelink communication with another UE.

Also, according to an aspect of the present disclosure, when the PSCCH resources are assigned within at least one RBS that succeed in channel occupancy based on the channel occupancy success status, the PSCCH resources may be assigned within any one RBS among the at least one RBS that succeed in the channel occupancy.

Also, according to an aspect of the present disclosure, when the PSCCH resources are assigned within at least one RBS that succeed in channel occupancy based on the channel occupancy success status, the PSCCH resources may be assigned to each of the at least one RBS that succeed in the channel occupancy, and the PSCCH may be duplicated and assigned to each of the at least one RBS that succeed in the channel occupancy.

Also, according to an aspect of the present disclosure, when the PSCCH resources are assigned within the at least one RBS, the PSCCH resources may be assigned to resources corresponding to the number of consecutive interlaces set from a lowest interlace RB included in a lowest subchannel within the RBS.

Also, according to an aspect of the present disclosure, when the PSCCH resources are assigned within the at least one RBS, the PSCCH resources may be assigned to resources corresponding to the number of inconsecutive interlaces set from a lowest interlace RB included in a lowest subchannel within the RBS.

EFFECT

According to the present disclosure, it is possible to provide a method of performing sidelink (SL) communication in a wireless communication system.

According to the present disclosure, it is possible to provide a method of configuring an SL resource pool in an unlicensed band.

According to the present disclosure, it is possible to provide a method of configuring an SL resource pool in an unlicensed band based on a resource block set (RBS) and an interlace/subchannel.

According to the present disclosure, it is possible to provide a method of transmitting a physical sidelink control channel (PSCCH) in an SL resource pool in an unlicensed band.

According to the present disclosure, it is possible to provide a method of assigning PSCCH resources in an SL resource pool in an unlicensed band.

According to the present disclosure, it is possible to provide a method of assigning 1st sidelink control information (SCI) and 2nd SCI resources.

According to the present disclosure, it is possible to provide a method of assigning PSCCH resources based on a listen before talk (LBT) success status within an SL resource pool.

Effects achievable from the present disclosure are not limited to the aforementioned effects and still other effects not described herein may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.

FIG. 2 illustrates an NR resource structure to which the present disclosure may apply.

FIG. 3 illustrates an NR sidelink slot structure to which the present disclosure may apply.

FIG. 4 illustrates an NR sidelink frequency to which the present disclosure may apply.

FIG. 5 illustrates an NR sidelink resource pool configuration to which the present disclosure may apply.

FIG. 6 illustrates an unlicensed band for each region for NR sidelink communication to which the present disclosure may apply.

FIG. 7 illustrates use of a 5 gigahertz (GHz) unlicensed band to which the present disclosure may apply.

FIG. 8 illustrates a method of increasing a bandwidth in consideration of a power spectral density (PSD) limitation to which the present disclosure may apply.

FIG. 9 illustrates a method of configuring a guard band in consideration of a shared band within an intra-cell to which the present disclosure may apply.

FIG. 10 illustrates an interlace-based resource block (RB) resource assignment method to which the present disclosure may apply.

FIG. 11 illustrates a method of performing a listen before talk (LBT) procedure in an unlicensed band to which the present disclosure may apply.

FIG. 12 illustrates a channel occupancy time (COT) sharing and discovery burst transmission to which the present disclosure may apply.

FIG. 13 illustrates a method of applying cyclic prefix (CP) extension to uplink when performing COT sharing between downlink and uplink to which the present disclosure may apply.

FIG. 14 illustrates a semi-static channel access procedure to which the present disclosure may apply.

FIG. 15 illustrates a method of performing channel occupancy to which the present disclosure may apply.

FIG. 16 illustrates a method of configuring a bandwidth part (BWP) in a sidelink unlicensed band and a resource block set (RBS) in a resource pool to which the present disclosure may apply.

FIG. 17 illustrates time and frequency resources of a PSCCH to which the present disclosure may apply.

FIG. 18 illustrates a method of assigning PSCCH resources within adjacent RBSs to which the present disclosure may apply.

FIG. 19 illustrates a method of assigning PSCCH resources within adjacent RBSs to which the present disclosure may apply.

FIG. 20 illustrates a case in which a plurality of resource block sets (RBSs) are configured in a single resource pool to which the present disclosure may apply.

FIG. 21 illustrates a case in which a plurality of RBSs are configured in a resource pool to which the present disclosure may apply.

FIG. 22 illustrates a case in which a plurality of RBSs are configured in a resource pool to which the present disclosure may apply.

FIG. 23 illustrates a case in which a plurality of RBSs are configured in a resource pool to which the present disclosure may apply.

FIG. 24 illustrates a case in which a plurality of RBSs are configured in a resource pool to which the present disclosure may apply.

FIG. 25 illustrates a method of assigning a PSCCH RB based on an associated interlace within a single subchannel to which the present disclosure may apply.

FIG. 26 illustrates a method of assigning a PSCCH RB based on an associated interlace within a single subchannel to which the present disclosure may apply.

FIG. 27 illustrates an SL channel to which the present disclosure may apply.

FIG. 28 illustrates a 2nd SCI resource assignment method to which the present disclosure may apply.

FIG. 29 illustrates a 2nd SCI resource assignment method to which the present disclosure may apply.

FIG. 30 illustrates a 2nd SCI resource assignment method to which the present disclosure may apply.

FIG. 31 illustrates a method of assigning $2^{nd}$ SCI to which the present disclosure may apply.

FIG. 32 illustrates a method of assigning $2^{nd}$ SCI based on a plurality of subchannels to which the present disclosure may apply.

FIG. 33 is a flowchart illustrating a PSCCH resource assignment method to which the present disclosure may apply.

FIG. 34 is a flowchart illustrating a PSCCH resource assignment method to which the present disclosure may apply.

FIG. 35 is a diagram illustrating a base station device and a terminal device to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

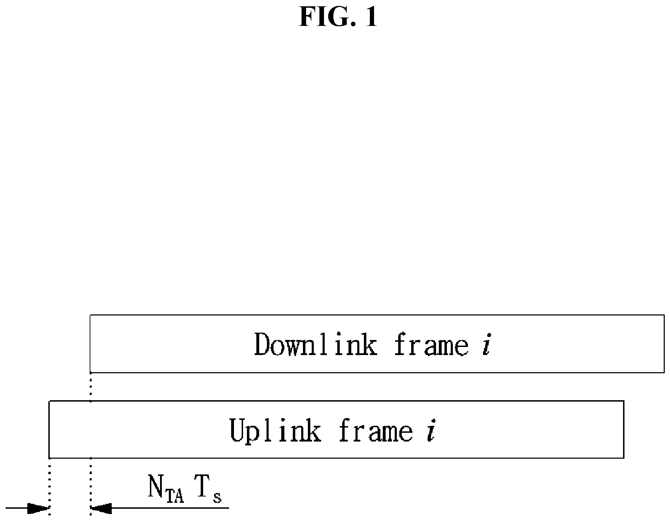

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max} N_f/100) \cdot T_s = 10\text{ms}$. Here, a single frame may include 10 subframes corresponding to $T_{sf} = (\Delta f_{max} N_f/1000) \cdot T_s = 1\text{ms}$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}=0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be $39936T_C$ or $2600T_C$. $39936T_C=20.327\mu s$ and $25600T_C=13.030\mu s$. Also, in FR2 (Frequency Range 2) which is millimeter wave (mmWave), the $N_{TA,offset}$ may be $13792T_C$. At this time, $39936T_C=7.020\ \mu s$.

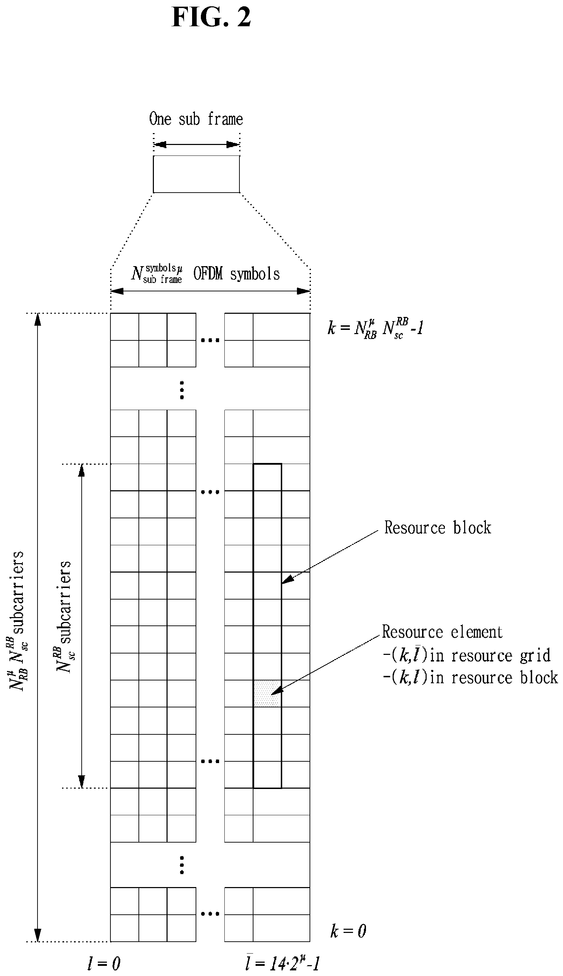

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}_{sc}$ represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu = 2$ and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu$ = 1 and 2 may be used in the unlicensed band of 6 GHz or less and an SCS corresponding to $\mu$ = 3 and 4 may be used in the unlicensed band above 6 GHz. Here, for example, if $\mu$ = 4, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| Vehicles Platooning |
| --- |
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor** |
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| **Advanced Driving** |
| Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |
| **RemoteDriving** |
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

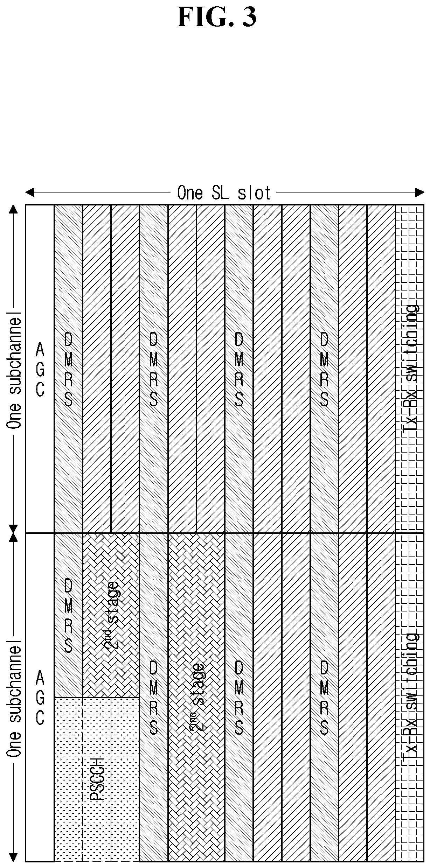

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

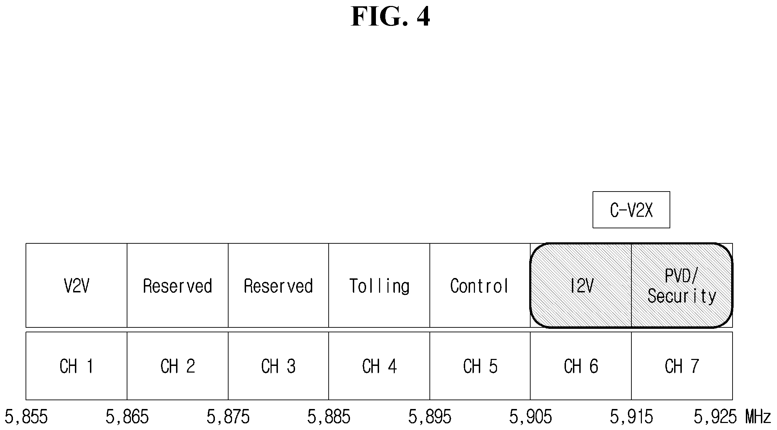

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
|---|
| - Delay:[3, 100ms]<br>- Reliability :[90%, 99.999%]<br>- Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |
| •NOTE 1: GBR and Delay Critical GBR PQIs can only be used for unicast PC5 communications. Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

|  | FR 1 | FR2 |
|---|---|---|
| PSSCH/PSCCH and PSFCH | - Normal CP for 15 kHz, 30 kHz, 60 kHz<br>- Extended CP for 60 kHz | - Normal CP for 60 kHz, 120 kHz,<br>- Extended CP for 60 kHz |

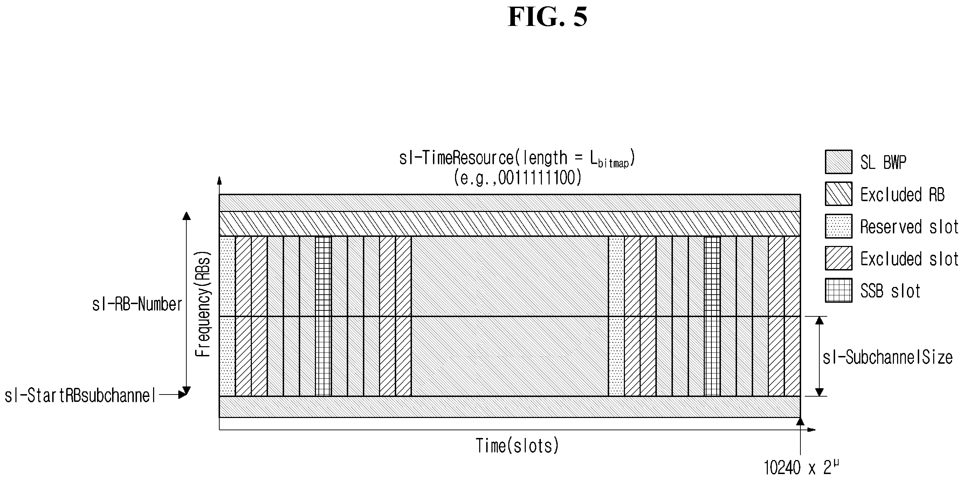

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

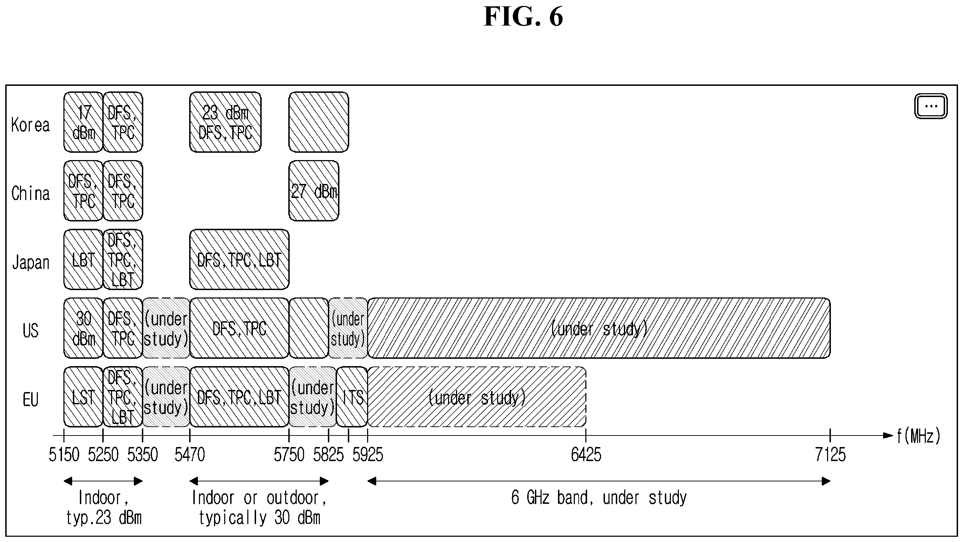

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 3550-3700 MHz) may be defined as a citizens broadband radio service (CBRS), but may not be limited thereto.

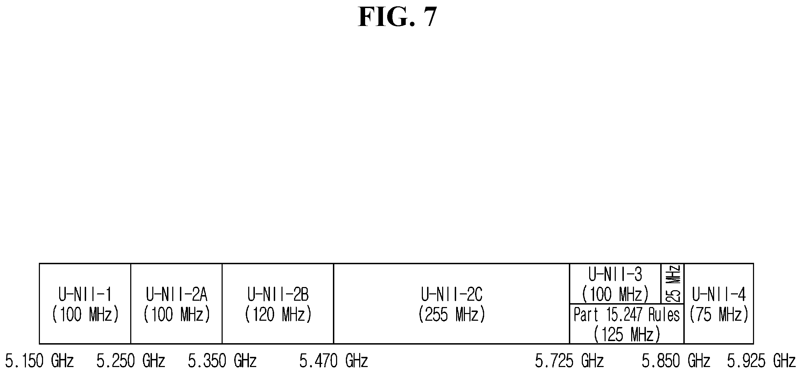

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

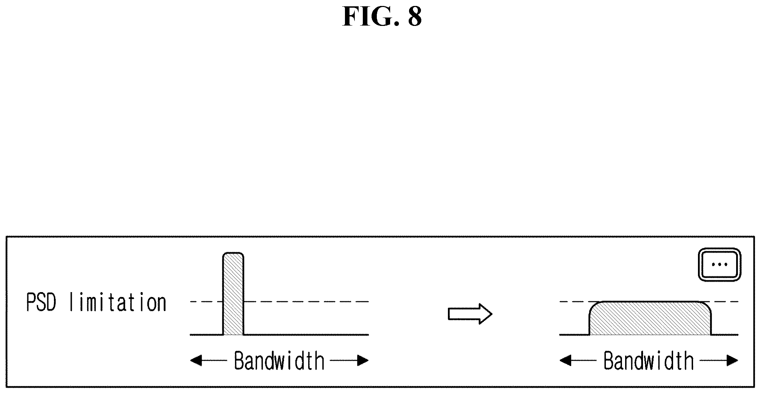

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

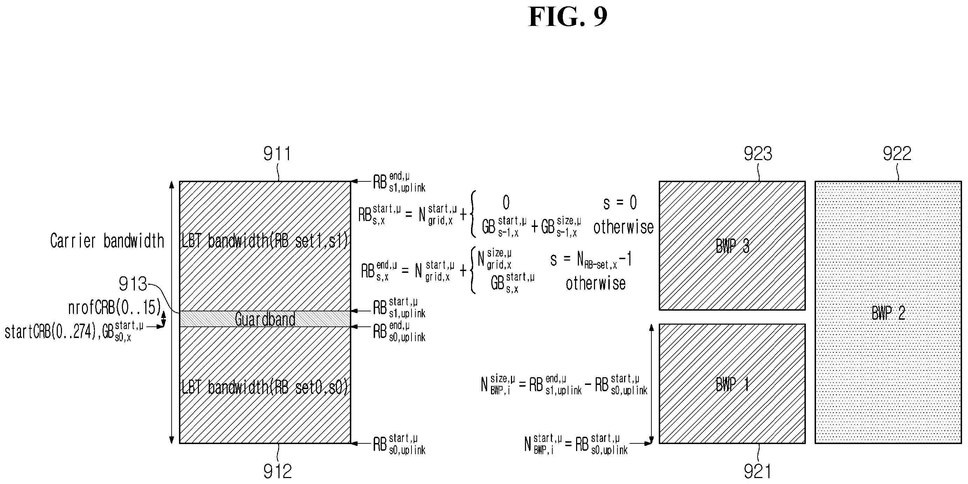

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{RB\text{-set,x}}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0,1, ..., N_{RB\text{-set,x}} - 2\}$, $N_{RB\text{-set,x}}$ denotes the number of RB sets, and x may be configured as DL or UL for downlink and uplink. $N_{RB\text{-set,x}}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$, and the end CRB may be $RB_{s,x}^{\text{end},\mu}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid,x}}^{\text{size},\mu}$.

Here, the start CRB and the end CRB for each RBS (911, 912) may be determined based on RBS index s, and RBS index s may be $s \in \{0,1, ..., N_{RB\text{-set,x}} - 1\}$. That is, RBS index s may be a resource block with a size of $RB_{s,x}^{\text{size},\mu}$, and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid},x}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

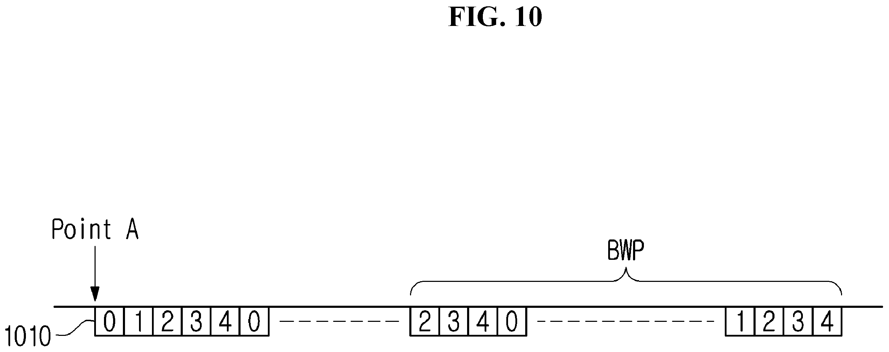

FIG. 10 illustrates an interlace-based RB resource assignment method applied to the present disclosure. PUCCH/PUSCH transmission may be performed through RB resources assigned based on interlaces. Here, a reference point for RB resource assigned based on interlace may be point A 1010. The UE may acquire information on the point A 1010 through base station signaling, which is described above. Also, a common resource block (CRB) may be a resource block defined/configured based on the point A 1010 that is a start location point of a transmission bandwidth on a carrier. That is, when physical uplink control channel (PUCCH)/physical uplink shared channel (PUSCH) transmission is performed with interlace-based RB resources, all the interlaces may be used based on the same configuration on the carrier based on the reference point A 1010 and the CRB. For example, as described above, the existing wireless communication system (e.g., LTE LAA) and wireless communication system (e.g., NR) may perform PUCCH/PUSCH transmission with the interlace-based RB resources, but may not be limited thereto.

For example, in the case of 15 kHz SCS, an interlace of M=10 may be defined for the entire bandwidth. In the case of 30 kHz SCS, an interlace of M=5 may be defined for the entire bandwidth. Also, X bits may be provided for interlace assignment through frequency resource assignment-related signaling. As a detailed example, if X = 5 for 30 kHz SCS, X bits may indicate all possible interlace combinations. As still another example, if X = 6 for 15 kHz SCS, X bits may indicate a start interlace index and the number of consecutive interlaces. For example, a value of 55 may be required based on the combination of the start interlace index and the number of consecutive interlaces. Therefore, when indicated with 6 bits, 9 remaining RIV values may be present and the 9 remaining RIV values may indicate specific pre-defined interlace combination.

Also, Y bits may be provided for RB set assignment through frequency resource assignment-related signaling. RB set assignment may be start and end RB sets based on an RIV format. Here, RB sets may be consecutive at all times. Also, for example, when two adjacent RB sets are assigned, a guard band between the RB sets may also be assigned and may be used as a frequency resource.

Also, for example, a method may be required to fairly access and use a channel between various wireless access technologies/systems (e.g., Wi-Fi, LAA, NR-U, etc.) in an unlicensed band. For example, a rule (e.g., ETSI rule) for channel access based on the aforementioned 5 GHz and 6 GHz frequency bands may be provided, and matters as shown

Table 10 below may be specified, but may not be limited thereto.

[Table 10]

| |
|---|
| - nominal center frequencies |
| - nominal channel bandwidth and occupied channel bandwidth |
| - RF output power limits |
| - transmit power control (TPC) and power density requirements |
| - transmitter unwanted emissions limits |
| - receiver spurious emissions requirements |
| - dynamic frequency selection (DFS) |
| - adaptivity (channel access -mechanism) |
| - receiver blocking requirements |
| - user access restrictions |

(continued)

| |
|---|
| - geo-location capability |

Here, as a channel access method based on Table 10, Frame Base Equipment (FBE) and Load Base Equipment (LBE) rules may be supported. For example, the LBE access rule may consider factors of Table 11 below. The channel access may be performed by determining a channel occupancy status based on clear channel assessment (CCA) measurement. Also, transmission based on an occupied channel may be performed after determining transmit power based on channel occupancy.

[Table 11]

| |
|---|
| - Medium energy sensing: performs energy measurement in a transmission candidate channel during an observation slot (9 us) time based on clear channel assessment (CCA) measurement. |
| Energy detection (ED) threshold (TL): Threshold for determining whether a channel is occupied. If energy greater than TL is detected, the UE determines that the channel is occupied, and otherwise, determines that the channel is empty (idle). The ED threshold is specified based on the maximum transmit power as shown below, assuming 0 dBi receive antenna. |
| · For PH $\leq$ 13 dBm: TL = -75 dBm/MHz (i.e., -62 dBm / 20 MHz) |
| · For 13 dBm < PH < 23 dBm: TL = -85 dBm/MHz + (23 dBm - PH) |
| · For PH $\geq$ 23 dBm: TL = -85 dBm/MHz (i.e., -72 dBm/20 MHz) |

A channel access priority class (CAPC) may be set for channel access, which may be as shown in Table 12. Here, a priority class may specify priority based on a specific traffic type and quality of service (QoS) requirements. For example, in Table 12, four priority classes may be defined. Here, a different priority counter (p) value may be specified for each priority class. Here, the higher priority class, the lower the priority counter value may be.

Also, for example, a channel occupancy time (COT) may be a transmission burst duration. Here, the maximum COT limit may be differently determined for each different priority class. A higher priority class may have a shorter maximum COT duration. That is, a higher priority class may have a lower priority counter value and a shorter maximum COT duration.

Also, for example, a contention window (CW) may be a window for selecting a counter value for performing a backoff procedure for channel access. Here, the contention window may be different for each priority class, which may be as shown in Table 12 below.

[Table 12]

| Channel Access Priority Class ($p$) | $m_p$ | $CW_{min,p}$ | $CW_{max,p}$ | $T_{mcot,p}$ | allowed $CW_p$sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

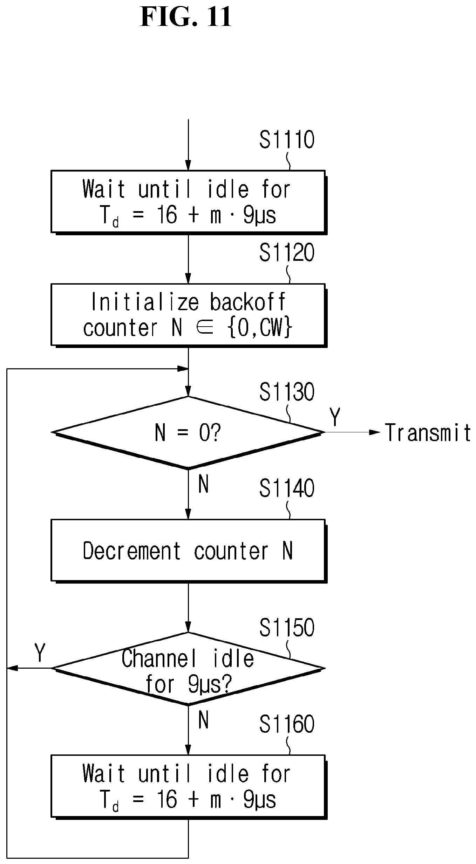

FIG. 11 illustrates a method of performing a listen before talk (LBT) procedure in an unlicensed band to which the present disclosure may apply. For example, a Type 1 LBT procedure (LBT cat 4) may be considered based on the aforementioned LBE. The LBT procedure may be set based on category 1 to category 4, which is described below. Referring to FIG. 11, a Tx node may wait to verify whether a channel is available for a defer period (S1110). Here, the defer period may be determined based on a priority class of Table 13 below. For example, the defer period may measure whether a channel is available for at least 25 us. Here, that feedback information on data transmission is transmitted within a maximum of 16 us may be considered. Considering the above, the defer period may measure whether the channel is available for at least 25 us.

When it is determined that the channel is available for the defer period, the corresponding node may perform a backoff procedure. Here, backoff counter N may be initialized to a random value between 0 and a CW value (S1120). That is, the random value between 0 and the CW value may be used as the backoff counter. Here, whether the channel is available may be counted based on 9 us slot and backoff may be performed as much as the backoff counter value. Here, a larger backoff value may be set based on a larger contention window and a collision probability may decrease accordingly.

Then, whether the backoff counter value is 0 may be determined (S1130). If the backoff counter value is 0, the corresponding node may perform transmission. The corresponding node may use the channel up to the maximum COT during which occupancy is allowed, based on a priority class for transmission. On the contrary, if the backoff counter value is not 0, the backoff counter value may decrement, that is, decrease (S1140). Then, whether the channel is idle in a next 9 us slot may be determined (S1150). Here, if the channel is in an idle state in the 9 us slot, whether the backoff counter value is 0 may be verified again. If the backoff counter value is not 0, an operation of decreasing the backoff counter value may be repeated. Through this, if the backoff counter value becomes 0, the aforementioned transmission may be performed.

On the contrary, if the channel is not idle in the 9 us slot, the corresponding node may wait again for an amount of time corresponding to the defer period and then verify whether the channel is available based on the backoff counter value (S1160). Based on the above, the corresponding node may occupy an unlicensed band and may perform transmission. Also, for example, the defer period for downlink/uplink, possible contention values, and maximum COT based on the priority class may be as shown in Table 13 below.

[Table 13]

| Priority Class | | Defer Period $T_d = 16 + m * 9us$ | Possible CW Values $\{CW_{min}, ....., CW_{max}\}$ | Max $COT^{a,b}$ (ms) |
|---|---|---|---|---|
| 1 | DL | 25 | {3, 7} | 2 |
| | UL | 34 | | 2 |
| 2 | DL | 25 | {7, 15} | 3 |
| | UL | 34 | | 4 |
| 3 | DL | 43 | {15, 31, 63} | 8 or 10 |
| | UL | | {15, 31, 63, 127, 255, 511, 1023} | 8 or 10 |
| 4 | DL | 79 | {15, 31, 63, 127, 255, 511, 1023} | 8 or 10 |
| | UL | | | 8 or 10 |

Here, for example, a contention window size may be adjusted based on HARQ feedback. In detail, if HARQ feedback received for a first transmission that the corresponding node performs within the COT is NACK, the contention window size may be doubled in consideration of retransmission. On the contrary, if HARQ feedback received for each transmission is ACK, the contention window size may be reset to a CW min value. Here, adjusting the contention window size with the first transmission within the COT may result in a collision in the first transmission after the node occupies the channel. In the aforementioned case, the contention window size needs to be updated. On the other hand, receiving NACK for transmission after the first transmission within the COT may be more likely to occur based on a poor channel environment or other reasons rather than collision occurrence. Accordingly, as described above, the contention window size may be adjusted based on feedback of the first transmission within the COT.

As still another example, contention window adjustment for configured grant-based downlink (DL)/uplink (UL) transmission may be performed based on feedback information in downlink/ feedback information in uplink, respectively. Also, for example, when downlink feedback transmission is absent in uplink grant-based uplink transmission, contention window adjustment may be performed through a new data indicator (NDI), but is not limited to a specific embodiment.

Also, for example, an energy detection (ED) threshold (TL) may be determined based on a parameter, a channel bandwidth, and other values. As still another example, the ED threshold may be determined depending on whether a carrier frequency is shared with other wireless access technologies (e.g., WiFi) or whether an installation method ensures the use of only a specific wireless communication system (e.g., NR). As a detailed example, in the 5 GHz band coexisting with other systems, a maximum threshold may be set to -72 dBm for 20 MHz carrier. Here, -72dBm may be a value that is determined through comparison to other wireless communication systems (e.g., WiFi system), but may not be limited to a specific embodiment. As still another example, if only a specific wireless communication system (e.g., NR) uses a carrier frequency, the maximum threshold may be used as -62dBm for 20MHz carrier and a threshold for uplink transmission may be set through RRC signaling, but may not be limited to a specific embodiment.

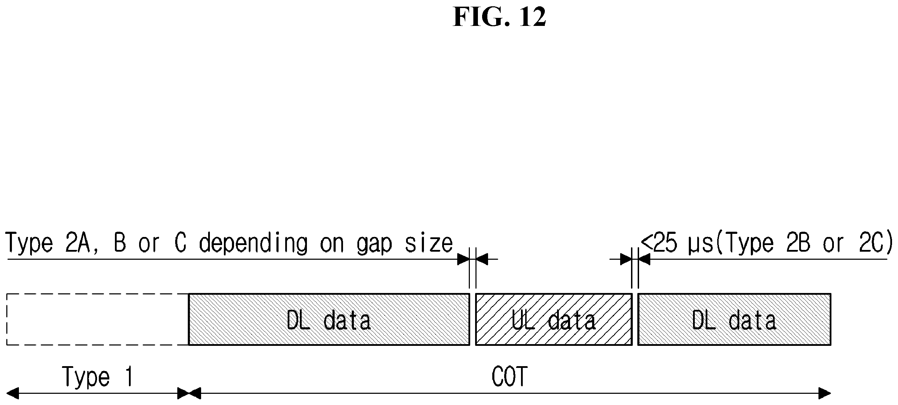

Then, FIG. 12 illustrates a COT sharing and discovery burst transmission applied to the present disclosure. Referring to FIG. 12, in the case of occupying a channel the aforementioned Type 1 LBT procedure, transmission may be performed within the COT. Here, Type 2 transmission may have three options based on a gap section within the COT, which may be as shown in Table 14 below. For example, Type 2A (LBT cat 2) transmission may set a COT gap to 25 us or more and may use the same for discovery burst transmission. For example, Type 2A may be considered for SSB transmission, but may not be limited thereto. As still another example, Type 2B transmission may be a type that applies a COT gap of 16 us. Also, Type 2C transmission may be a type that applies a COT gap of 16 us or less. For example, if next transmission is 16 us at most, idle sensing may not be required and Type 2C may be applied.

[Table 14]

| |
|---|
| - Type 2A (LBT cat 2) - applies COT gap of 25 us or more/uses the same for discovery burst transmission<br>- Type 2B - applies COT gap of 16 us<br>- Type 2C (LBT cat 1) -applies COT gap of 16 us or less |

Here, for the aforementioned COT sharing, the gap may be smaller than an OFDM symbol interval. This is because an OFDM symbol-based resource assignment method may be insufficient and a method of indicating CP extension may be applied by taking the aforementioned issues into consideration. That is, extending a CP faster than an OFDM symbol boundary may be indicated and one of Table 15 below may be indicated.

[Table 15]

| |
|---|
| - No CP extension<br>- $C_2 T_{symb}$ - $T_{TA}$ - 16 $\mu$s => use with Type 2B<br>- $C_3 T_{symb}$ - $T_{TA}$ - 25 $\mu$s, => use with Type 2A<br>- Tsymb - 25 $\mu$s - option that does not compensate for TA |

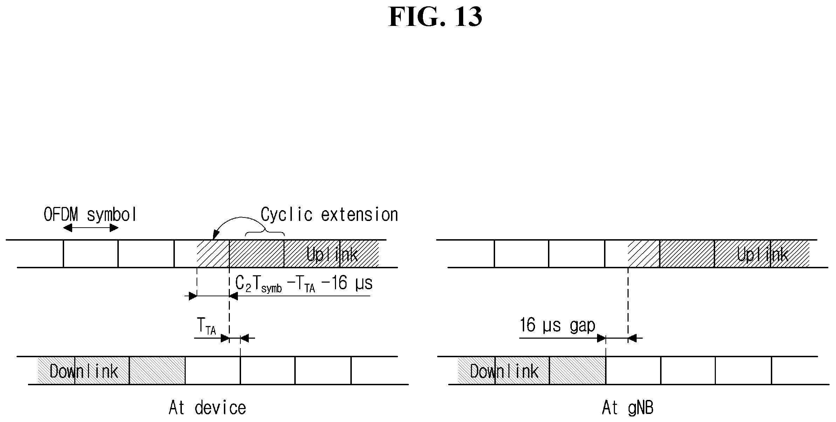

For example, FIG. 13 illustrates a method of applying CP extension to uplink when performing COT sharing between downlink and uplink, applicable to the present disclosure. FIG. 13 illustrates a case in which C2 is set to 1 with 16 us gap based on COT sharing, but is not limited thereto. Referring to FIG. 13, a TA value may be considered to ensure the 16 us gap between downlink and uplink in a base station. For example, C values may be set through RRC signaling. Also, CP extension for uplink transmission may be indicated in uplink grant.

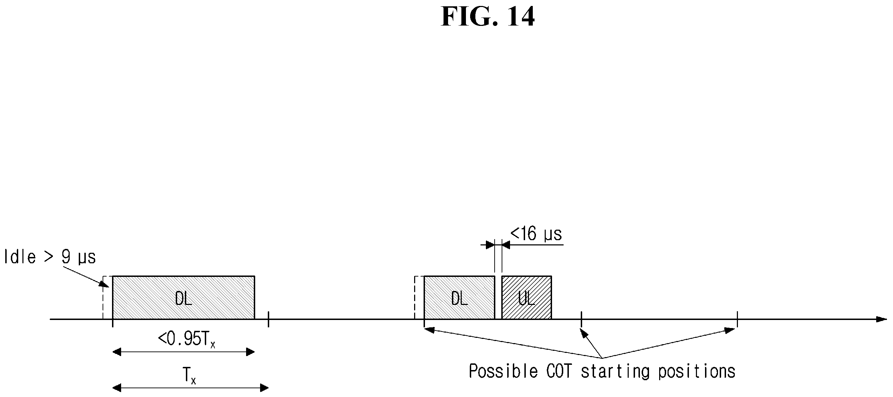

As still another example, a case of performing channel access based on a FBE method may be considered. The FBE method may be a channel occupancy method applicable to a region (e.g., specific building, factory) in which absence of other systems is ensured through a rule. Here, in the case of performing channel access based on the FBE method, transmission may start at a specific point in time. As a detailed example, FIG. 14 illustrates a semi-static channel access procedure applicable to the present disclosure. Referring to FIG. 14, a single COT may start every Tx ms. Here, when the channel is idle for at least 9 us before the COT, the channel may be occupied. Here, Tx ms may be set to one of 1 ms to 10 ms values. Also, the gap may be at least 5% of Tx. Here, COT sharing may be used in a similar manner as the LBE and the gap may be 16 us at most.

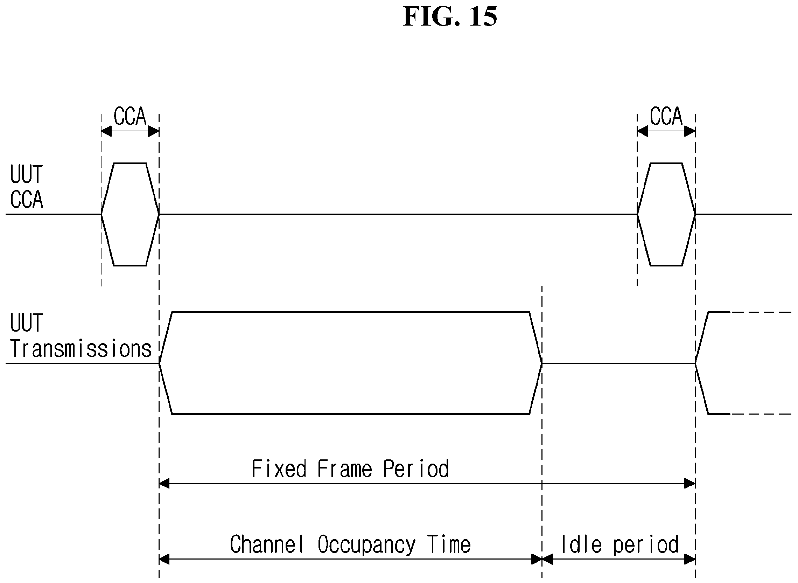

For example, FIG. 15 illustrates a method of performing channel occupancy applicable to the present disclosure. Referring to FIG. 15, a device may perform CCA check in a CCA observation period not smaller than 20 us based on energy detection, before performing transmission in an operating channel. Also, for example, in the case of transmitting a control frame (e.g., ACK, block ACK) in consideration of multicast, a CCA procedure may be skipped and transmission may be performed immediately after receiving a packet. That is, the UE may perform control frame transmission without a new CCA procedure, but this may not exceed the maximum COT.

For example, when the device transmits an ACK/NACK signal after receiving data, the device may skip the CCA, but this needs to be within the maximum COT. Also, for example, transmission of a signal with a maximum duty cycle within 5% of 50 ms as an observation period through short control signaling may be performed without CCA, but may not be limited to a specific form.

Also, for example, an LBT category may be considered. The LBT category may consider category 1 that performs transmission immediately after a short switching gap, category 2 that performs LBT without random backoff, category 3 in which a contention window of a fixed size and random backoff are performed, and category 4 in which a contention window of a variable size and random backoff are performed.

In detail, category 1 may be a method of performing transmission immediately after a short switching gap. Here, category 1 may be used to perform transmission immediately after a switching gap within one COT. The switching gap from receive to transmit within one COT may include a switching time of a transceiver, and may not be longer than 16 us. Also, for example, category 2 may be an operation of performing LBT without random backoff. For example, in the case of performing LBT, category 2 may be a method of performing initial CCA and, if the channel is idle, occupying the channel and transmitting data in an unlicensed channel. Here, random backoff count may not be performed. On the other hand, category 3 may be an LBT method in which random backoff is performed with the contention window of the fixed size. As a case in which LBT is performed based on category 3, if the channel is idle by performing initial CCA, random backoff may be performed with the fixed contention window (e.g., fixed "q" value in which q denotes a value that determines a contention window size of selecting a random N counter between 0 and q). For example, a random backoff operation allows a counter value randomly selected within the contention window to occupy the channel when the value is 0 by decreasing the count depending on whether the channel is idle for each ECCA slot.

As still another example, category 4 may be an LBT method in which random backoff is performed with the contention window of the variable size. Category 4 may differ from category 3 in that category 4 has a variable contention window. On the other hand, an operation of occupying the channel by applying an N value based on a random backoff value may be the same. That is, category 4 may be the same as category 3 except that the contention window size may differ based on a time or an event compared to category 3, and may be used in a plurality of wireless communication systems (e.g., LAA, NR-U, WiFi), but is not limited to a specific embodiment. Here, for example, different channel access categories (e.g., LBT category) may be defined and used for transmission of other channels/signals within one COT. Also, for example, in a new wireless communication system (e.g., NR-U), category 4 LBT and category 2 may be used within the COT, which may be as shown in Table 16 below. Also, category 2 LBT may be used for discovery burst transmission in a case in which there is no unicast transmission and a feature of the transmission is a limited transmission with transmission in a time of 1 ms or less and of which duty cycle is 5% or less, but may not be limited to a specific form.

[Table 16]

| Channel access LBT mechanisms defined for NR-U along with their designation: |
| --- |
| - Cat 4 LBT with a contention window (Type 1) |
| - Cat 2 LBT with 25 $\mu$s gap (Type 2A) |
| - Cat 2 LBT with 16 $\mu$s gap (Type 2B) |
| - Cat 1 LBT with no more than 16 $\mu$s gap without channel sensing (Type 2C) |
| ☐ A transmission burst length limit of 0.584 ms is applied when using this. |

In the following, a method of assigning frequency resources such that sidelink communication of a wireless communication system (e.g., NR) may be operable in an unlicensed frequency band is described. For example, currently, a size of an RB set included in 20 MHz in the unlicensed band (e.g., NR-U) of the wireless communication system may be different based on an SCS. For example, for 15 kHz SCS, the size of the RB set may be 100 to 110 PRBs. Also, for 30 kHz SCS, the size of the RB set may be 50 to 55 PRBs. Here, for example, in the case of assigning interlace-based RB resources, some interlaces may include 11 PRBs, but remaining interlaces may include only 10 PRBs.

Here, for example, a case of varying a size of a subchannel to use the entire bandwidth in sidelink may be considered. That is, a case of differently setting the number of PRBs included in each subchannel may be considered. However, in a case in which different subchannel sizes are set, it may be difficult to guarantee transmission if retransmission is performed after initial transmission of a TB with the same transport block size (TBS). Considering the above, the subchannel size (i.e., number of PRBs) in each subchannel may be set to be the same, but may not be limited thereto. However, if the subchannel size is set to be the same in each subchannel, some may not be used in a single interlace based on interlace-based RB resource configuration.

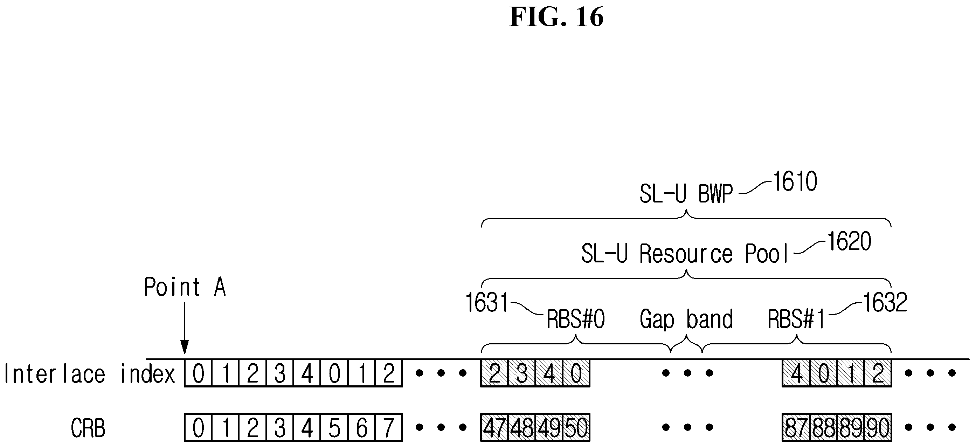

Here, for example, FIG. 16 illustrates a method of setting an RBS in a BWP and resource pool in a sidelink unlicensed band to which the present disclosure may apply. A frequency domain resource structure of a wireless communication system (e.g., NR SL-U) of the sidelink unlicensed band may consider a bandwidth part (BWP), a resource pool (RP), an interlaced RB, and an RBS (RB set). Here, the RBS may be considered even in the wireless communication system (e.g., NR U) of the unlicensed band, and it is not limited to a specific embodiment.

Referring to FIG. 16, a single sidelink unlicensed band (SL-U) BWP 1610 may be configured in a sidelink UE, a single SL-U RP 1620 may be configured in the SL-U BWP 1610, and two RBSs 1631 and 1632 may be configured in the SL-U RP 1620. However, it is only an example for clarity of description and is not limited to the aforementioned embodiment. Here, for example, in an SL-U system, an interlace structure may be considered to meet OCB and PSD requirements required in the unlicensed band. That is, in the SL-U system, the sidelink interlace structure may be performed by performing CRB indexing based on point A that is a reference frequency point of a single carrier. In FIG. 16, a frequency domain corresponding to CBR index 47 to CRB index 90 may be configured as the SL-U BWP 1610 based on configuration of the SL-U BWP 1610 and frequency resources including two RBSs RBS 1631 and 1632 may be configured based on configuration of the SL-U RP 1620, but it is only an example and may not be limited thereto. In the following, a frequency domain resource configuration method for the SL-U system as shown in FIG.16 and a resource assignment method for actual SL-U data transmission based thereon are described.

For example, in a channel access procedure of a sidelink unlicensed band wireless communication system (e.g., NR SL-U), the aforementioned type 1 channel access procedure and type 2 channel access procedure may be applied. Also, for example, UE-to-UE COT sharing may be applied to UEs that operate in the sidelink unlicensed band. That is, a single Tx UE may share a portion of unlicensed resources acquired through the LBT procedure with an Rx UE or another UE.

For example, as in the existing sidelink wireless communication system (NR SL), frequency resources may be configured based on a subchannel in the wireless communication system (e.g., NR SL-U) of the sidelink unlicensed band.

That is, the term "subchannel" may be used even in NR SL-U as in NR SL. However, the name of the subchannel may be differently configured in the wireless communication system (e.g., NR SL-U) of the sidelink unlicensed band and is not limited to a specific embodiment. The following description is made based on the subchannel for clarity of description.

For example, a single interlace-based RB structure to meet the aforementioned unlicensed band requirements may be defined as M RBs in the frequency domain. Here, the interlace-based RB structure may be defined as RBs with an interval corresponding to the uniform number of RBs. As still another example, the interlace-based RB structure may be configured using RBs with an interval corresponding the ununiform number of RBs and is not limited to a specific embodiment.

Here, the interlace-based RB structure may be preconfigured commonly for NR SL UEs in a cell-specific or carrier-specific manner according to configuration based on a bandwidth/numerology. As still another example, the interlace-based RB structure may be configured specifically in a physical link between UEs by higher layer configuration, and is not limited to a specific embodiment. Here, the interlace-based RB structure may be applied to all interlaces regardless of the carrier bandwidth. Therefore, the interlace-based RB structure may be configured according to a CRB that is defined based on point A that is a specific reference point in the frequency domain. Here, a single subchannel may be defined to be preconfigured with k interlaces. As still another example, a single subchannel may be configured with k interlaces through higher layer signaling. k may be the number of interlaces per subchannel. The number of interlaces per subchannel may have a fraction (or decimal value) or an integer value, which is described below. Also, for example, when a plurality of RBSs are configured within a single SL BWP, frequency resource assignment indication may include RBS assignment information and subchannel or interlace-based RB frequency resource assignment information.

As still another example, resource assignment may be performed based on an interlace-based RB unit rather than a "subchannel" unit in the sidelink unlicensed band system (e.g., NR SL-U). Here, the frequency resource assignment unit may be an interlace-based RB unit rather than the existing subchannel, but this is only an example and is not limited to a specific embodiment.

In the following, both the subchannel unit and interlace-based RB unit may be considered as resource allocation units in the frequency domain. Here, the subchannel may be configured with k interlaces or may be configured with the number of consecutive RBs. However, in the following, for clarity of description, the "subchannel unit" based on the interlace structure is described as the unit of frequency resource assignment. However, it is also possible to configure frequency resource assignment with the interlace-based RB unit rather than the subchannel unit by applying the proposed method, and is not limited to a specific form.

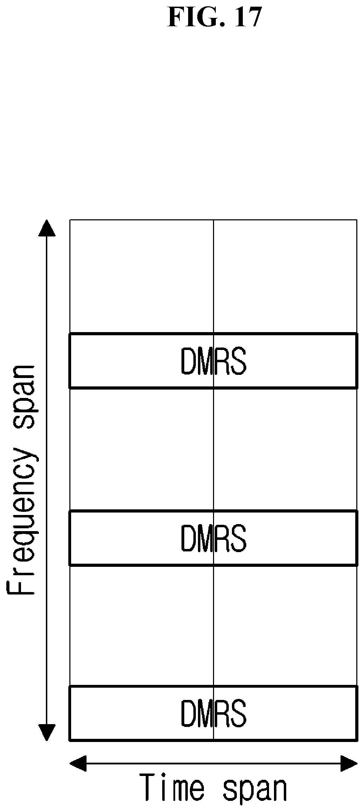

FIG. 17 illustrates time and frequency resources of a PSCCH to which the present disclosure may apply. A single sidelink slot (SL slot) may include a single automatic gain control (AGC) symbol. Here, the PSCCH may be transmitted on two or three OFDM symbols following an AGC symbol at start of a slot in the time domain. Also, the PSCCH may be configured to a single value among {10, 12, 15, 20, 25} PRBs in the frequency domain, which may be as shown in Table 17 below.

Here, the configured frequency resources for the PSCCH may be assigned within a single subchannel. Also, a PSCCH DMRS is present in all PSCCH symbols and, from frequency perspective, may be present in every fourth resource element among 12 REs within a single PRB as shown in FIG. 17. For example, it may be applied to a PSCCH DMRS to reduce the impact of PSCCH transmission collision between UEs with different OCC codes in the frequency domain and the PSCCH may be assigned in the time/frequency domain as shown in FIG. 17. When sidelink communication is performed based on a sidelink unlicensed band, a method of performing transmission by assigning PSCCH resources may be required, which is described below.

[Table 17]

| |
|---|
| - Time domain: Assignment on two or three OFDM symbols from start of slot (excluding AGC symbol) (following AGC symbol at start of symbol) <br> - Frequency domain: {10, 12, 15, 20, 25} PRBs are configured and assignment within a single subchannel |

For example, at least one RBS may be configured within a resource pool within a single SL BWP. Here, an available PSCCH transmission resource area for PSCCH transmission of a Tx UE may be flexibly changed depending on a channel access success status (LBT success status) required for each RBS (LBT BW) in the unlicensed band. Also, for example, to satisfy regulations required in the unlicensed band such as OCB and PSD, a subchannel with "interlace-based RB structure" or the interlace-based RB structure may be configured within the resource pool, which is described above. For example, PSCCH resources need to be assigned using a different method from FIG. 3 in consideration of various conditions required to use the unlicensed band, which is described below.

Subchannel-based time resource and frequency resource configuration for SL communication may be as shown in Table 18 below. However, a method may be required for the SL resource pool to satisfy unlicensed band regulations and the following description is made based on a case of performing interlace-based transmission. However, it may not be limited thereto.

[Table 18]

| **Time resource** |
| --- |
| Configurable resource pool time periodicity<br>Sidelink slot set within configurable single resource pool periodicity (sl-TimeResource (length = $L_{bitmap}$))<br>First symbol (OFDM symbol index #0~7) of set of consecutive symbols within a single slot and the number of consecutive symbols (OFDM symbol index #7~14) |
| **Frequency resource** |
| Bandwidth of configurable single subchannel (e.g., sl-SubchannelSize = {10, 15, 20, 25, 50, 75 and 100} RBs)<br>Configurable resource pool bandwidth (set of consecutive subchannels (sl-NumSubchannel = {1~27}))<br>Frequency domain location of first subchannel of resource pool (sl-StartRBsubchannel={0~265}) |

### 1st SCI and 2nd SCI resource assignment method

Relationship between CRB, interlace index, and subchannel indexing may be configured in various forms. For example, PSCCH resource assignment may be performed based on physical resources associated with specific subchannel index within PSSCH resources indicated for SL communication. As another example, PSCCH resource assignment may be performed based on physical resources associated with specific interlace index within PSSCH resources indicated for SL communication. That is, PSCCH resource assignment may be performed based on a specific index of subchannel or interlace considered as a basic sidelink resource assignment structure. Alternatively, PSCCH resource assignment may be performed based on a PSCCH PRB configured in the specific subchannel or interlace within PSSCH resources indicated for SL communication. In the following, it is assumed that PSCCH resource assignment may be performed based on the basic resource assignment structure (e.g., subchannel or interface) regardless of which physical resource structure and resource index is applied in the SL unlicensed band. The following proposed PSCCH resource assignment method may be applied to 1st SCI transmitted through the aforementioned PSCCH. However, the PSCCH resource assignment method is not limited to the 1st SCI and may be considered for an assignment method for 2nd SCI resource in the PSSCH. Description related thereto is made below.

In detail, for example, 2nd SCI may be assigned with PSSCH/PSCCH transmission in different OFDM symbol/-frequency resources that do not overlap within specific interlace/specific RBs within a specific subchannel (i.e., within the same subchannel index/interlace index/RB), which is a frequency resource index determined for PSCCH transmission within the PSSCH resource area assigned for SL communication. Also, for example, in the following, the PSCCH may be assigned in order of specific SL carrier index (in the case of SL CA), specific RBS, specific subchannel index, and specific interlace RB index, which is described below. Also, 2nd SCI may be assigned to a portion of the existing PSSCH area in at least one of resources within the same carrier, RBS, subchannel, and interlace index as a resource area to which the PSCCH is assigned. Description related thereto is made below.

Although a resource assignment method for PSCCH assignment is described below for clarity of description, the following resource assignment methods may be considered for a resource assignment method for transmitting 2nd SCI to be transmitted within the PSSCH in the selected resource area and may not be limited to a specific embodiment.

### Resource assignment method for PSCCH bind monitoring

The UE that operates in the SL unlicensed band may be configured to perform SL control signal and data transmission and reception based on an interlace RB structure, based on higher layer configuration. As another example, the UE that operates in the SL unlicensed band may be preconfigured to perform SL control signal and data transmission and reception in the interlace RB based on regulations of the unlicensed band. That is, the UE may perform SL control signal and data transmission and reception in the interlace RB based on higher layer configuration or predetermined configuration. The configuration information may be provided through higher layer signaling from the base station and, if there is no such information, may be preconfigured in the UE independently for each carrier/BWP or resource pool.

Also, at least one RBS corresponding to an LBT bandwidth in the unlicensed bandwidth may be configured to be present within a single resource pool. Here, RBS and resource pool configuration may be provided from the base station to SL UEs through higher layer (e.g., RRC, MAC) signaling. As another example, a preconfigured parameter (i.e., pre-defined parameter) may be provided in advance based on a value stored in the UE and then applied. For example, when the preconfigured parameter (i.e., pre-defined parameter) is provided in advance based on a value stored in the UE and then applied, it may be replaced with a new parameter value through higher layer signaling of the base station and then applied when the UE connects to the network (e.g., NR, LTE), which is not limited to a specific embodiment.

Here, for example, PSCCH resources may be limited and assigned within each RBS regardless of whether LBT performed in a plurality of RBSs succeeds and associated PSSCH resource assignment. In more detail, an Rx UE may verify PSSCH resource assignment information based on SCI (PSCCH) detection and may receive the PSSCH through this. Here, although the Rx UE receives the PSSCH through a plurality of consecutive RBSs, no problem may occur. On the other hand, when the Rx UE attempts to decode the PSCCH, the Rx UE may not verify in advance the RBS and the subchannel/interlace through which the PSCCH is received and may verify the PSCCH through blind decoding. Therefore, the UE may need to perform blind decoding in all SL resource pool. In the case of the SL resource pool in the unlicensed band, the range of PSSCH transmission frequency resources may flexibly vary depending on in which RBS LBT is successful among the plurality of RBSs within the SL resource pool. Also, for example, as described above, a guard band may be present between two adjacent RBSs. When the resource pool includes two adjacent RBSs, PRBs within the guard band may be used for SL communication as resources within the resource pool. That is, the resource pool may use not only PRBs within two adjacent RBSs but also PRBs within the guard band present therebetween as resources for SL communication. Therefore, from Tx UE's perspective, whether to use frequency resources within the guard band for at least PSSCH transmission and reception may be determined based on whether the LBT is successful between adjacent two RBSs. For example, when the LBT of adjacent two RBSs is all successful, guard band resources between frequency resources within the guard band between the adjacent RBSs may also be used for PSSCH transmission based on at least one of subchannel and interlace RBs.

In detail, for example, Table 19 below may show a case in which the resource pool configured in the Rx UE includes 4 RBSs. Each of the RBSs configured in the resource pool may have a different LBT success status. Since the Rx UE may not verify in which RBS the LBT is successful before receiving the PSCCH, the PSCCH needs to be verified through blind decoding. Here, the blind decoding combination for receiving the PSCCH may be as shown in Table 19 below in consideration of various resource utilization situations. That is, a problem that blind decoding increases the Rx UE needs to perform may arise in consideration of an LBT success status in each RBS. A method to solve this may be required.

[Table 19]

| |
|---|
| Blind decoding 1) If LBT succeeds only in RBS#0 => PSCCH/PSSCH is assigned only within {RBS#0} <br> Blind decoding 2) If LBT succeeds only in RBS#1 => PSCCH/PSSCH is assigned only within {RBS#1} <br> Blind decoding 3) If LBT succeeds only in RBS#2 => PSCCH/PSSCH is assigned only within {RB S#2} <br> Blind decoding 4) If LBT succeeds only in RBS#3 => PSCCH/PSSCH is assigned only within {RBS#3} <br> Blind decoding 5) If LBT succeeds only in RBS#0 and 1 => at least PSSCH is assigned within {RBS#0 + GB + RBS#1} <br> Blind decoding 6) If LBT succeeds only in RBS#1 and 2 => at least PSSCH is assigned within {RBS#1 + GB + RBS#2} <br> Blind decoding 7) If LBT succeeds only in RBS#2 and 3 => at least PSSCH is assigned within {RBS#2 + GB + RBS#3} <br> Blind decoding 8) If LBT succeeds only in RBS#0, 1, and 2 => at least PSSCH is assigned within {RBS#0 + GB + RBS#1 + GB + RBS#2} <br> Blind decoding 9) If LBT succeeds only in RBS#1, 2, and 3 => at least PSSCH is assigned within {RBS#1 + GB + RBS#2 + GB + RBS#3} - Blind decoding 10) If LBT succeeds in all RBSs => at least PSSCH is assigned within {RBS#0 + GB + RBS#1 + GB + RBS#2 + GB + RBS#3} |

The range of physical resources within the resource pool including at least one subchannel or interlace may be flexible depending on the LBT success status. Therefore, as shown in Table 19, the blind decoding combination for verifying the PSCCH may increase and, based thereon, blind decoding complexity may increase and power consumption of the UE may increase. Considering this, PSCCH resource assignment may be limited within each RBS. That is, PSCCH resource assignment may be performed by being limited within each RBS resource regardless of whether two adjacent RBSs have succeeded in LBT.

Here, for example, if at least one RBS is configured within a single resource pool and the LBT is successful in only a single RBS, PSCCH and PSSCH transmission may be performed within the RBS in which the LBT was successful. That is, when only a single RBS among the plurality of RBSs within the resource pool configured based on the SL unlicensed band succeeds in the LBT, the UE may perform PSCCH and PSSCH transmission in the corresponding RBS.

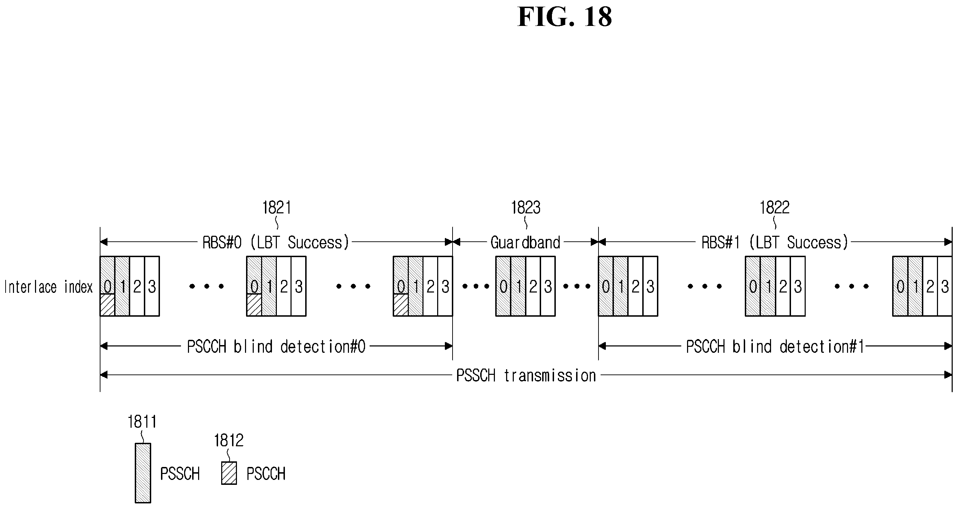

On the other hand, a case in which one or more adjacent (consecutive) RBSs among the plurality of RBSs within the SL resource pool succeed in the LBT may be considered. Here, the PSCCH may be transmitted within a specific single RBS among one or more adjacent RBSs that succeed in LBT. That is, the PSCCH may be transmitted through a specific single RBS among the plurality of RBSs (hereinafter, option 1). Here, for example, the PSCCH may be transmitted through an RBS with a lowest or highest RBS index among RBSs that succeeded in the LBT. As another example, the PSCCH may be transmitted through a specific RBS that is selected by the Tx UE in an implemented manner from among RBSs that succeed in the LBT, and is not limited to a specific embodiment. FIG. 18 illustrates a method of assigning PSCCH resources within adjacent RBSs according to an embodiment. As another example, all of the Tx UE/Rx UE may be configured by higher layer to perform PSCCH transmission in a specific RBS at all times among RBSs configured within the resource pool. In this case, the Tx UE has the condition of having the LBT succeed for PSCCH transmission in at least the specific RBS, but the Rx UE may have the advantage of not having to perform PSCCH monitoring in all RBSs. Referring to FIG. 18, the UE may transmit a PSSCH 1811 and a PSCCH 1812 to another UE through resources within a resource pool configured based on an SL unlicensed band. Here, RBS#0 1821 and RBS#1 1822 may be adjacent RBSs, and a guard band 1823 may be present between the RBS#0 1821 and the RBS#1 1822. For example, FIG. 18 may consider a case in which LBT of the RBS#0 1821 and LBT of the RBS#1 1822 are all successful. Here, the UE may perform transmission of the PSCCH 1812 in the RBS#0 1821 determined by the methods and may not perform transmission of the PSCCH 1812 in the RBS#1 1822. The UE may perform transmission of the PSSCH 1811 and the PSCCH 1812 in the RBS#0 1821 and may transmit only the PSSCH 1811 in the RBS#1 1822. Also, since a guard band 1823 between the adjacent RBSs may be a resource within the resource pool, transmission of the PSSCH 1811 may be performed through the corresponding resource.

That is, when the LBT succeeds in adjacent (consecutive) RBSs within the resource pool of the SL unlicensed band, the UE may perform PSCCH transmission only within a specific single RBS among RBSs that succeed in the LBT. For example, the specific single RBS may be an RBS with a lowest RBS index. As another example, the specific single RBS may be an RBS with a highest RBS index or may be an RBS configured based on a certain condition, and is not limited to a specific embodiment. That is, the PSCCH may be transmitted only through the specific single (partial) RBS among RBSs that succeed in the LBT.

As still another example, when LBT of at least one adjacent (consecutive) RBS is successful for the plurality of RBSs within the SL resource pool, the PSCCH may be transmitted in each of the one or more adjacent RBSs that succeed in the LBT. That is, the PSCCH may be transmitted through each of the plurality of RBSs (hereinafter, option 2). That is, when the LBT is successful in adjacent (consecutive) RBSs within the resource pool of the SL unlicensed band, the UE may perform PSCCH transmission within a frequency resource of RBSs that succeed in the LBT. Here, PSCCH processing may be performed by channel coding and rate matching based on an amount of PSCCH transmission resources assigned in a single RBS. For example, an amount of PSCCH transmission resources may be the number of OFDM symbols and the number of interlace RBs to be configured by higher layer parameters, but may not be limited thereto. That is, PSCCH processing may be performed based on PSCCH transmission resources assigned in a single RBS. PSCCH transmitted on another RBS may be redundantly transmitted by duplicating the aforementioned PSCCH. That is, the PSCCH transmitted on each RBS may be duplicated and transmitted as the same PSCCH. Also, for example, all the frequency resource related indexes and locations of the PSCCH within the RBS may be the same. As another example, the frequency resource related index and location of the PSCCH may be determined based on pre-configuration and offset value of each RBS. For example, the frequency resource related index and location of the PSCCH may be determined based on an RBS with the lowest index among RBSs that succeed in the LBT and the aforementioned offset may be determined according to the RBS index. That is, the frequency resource related index and location of the PSCCH may be determined in the RBS with the lowest index and, within another RBS, frequency resources shifted by the offset determined according to the RBS index may be assigned, but may not be limited thereto. As another example, PSCCH channel coding and rate matching may be performed in consideration of a total amount of PSCCH resources to be transmitted in successful RBSs based on the same SCI. The corresponding method may have the advantage of being able to transmit more redundant channel code bits to the Rx UE than the aforementioned method, thereby additionally improving reception performance. Also, the PSSCH may be transmitted through a resource within a guard band between an RBS that succeeds in LBT and an RBS adjacent thereto, as described above.

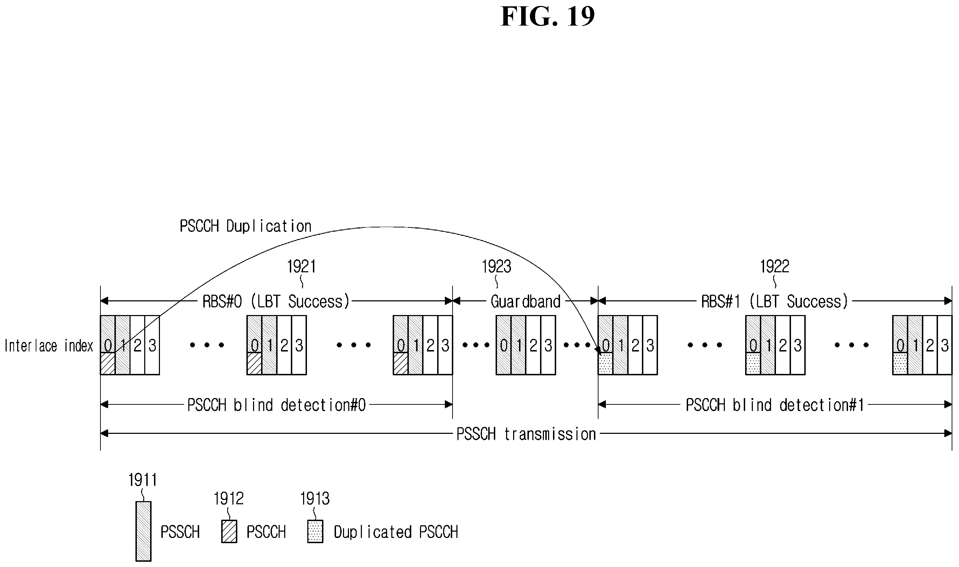

FIG. 19 illustrates a method of assigning PSCCH resources within adjacent RBSs according to an embodiment. Referring to FIG. 19, the UE may transmit a PSSCH 1911 and a PSCCH 1912 to another UE through resources within a resource pool configured based on an SL unlicensed band. Here, RBS#0 1921 and RBS#1 1922 may be adjacent RBSs, and a guard band 1923 may be present between the RBS#0 1921 and the RBS#1 1922. For example, FIG. 19 may consider a case in which LBT of the RBS#0 1921 and LBT of RBS#1 1922 are all successful. Here, the UE may perform transmission of the PSCCHs 1912 and 1913 in the RBS#0 1921 and the RBS#1 1922. Here, the PSCCH 1913 transmitted in the RBS#1 1922 may be a PSCCH by duplicating the PSCCH 1912 transmitted in the RBS#0 1921. The UE may perform transmission of the PSSCH 1911 in the RBS#0 1921, the RBS#1 1922, and the guard band 1923.

As another example, a method of duplicating and transmitting a PSCCH within each RBS may vary depending on higher layer configuration. For example, information indicating PSCCH duplication and transmission may be configured according to higher layer configuration. If the corresponding information indicates PSCCH duplication and transmission, the PSCCH may be duplicated and transmitted within each RBS. In detail, when configuration indicating PSCCH duplication and transmission is present, the UE may duplicate and transmit the PSCCH in each RBS that succeeds in LBT (option 2). On the contrary, when configuration indicating PSCCH duplication and transmission is absent, the PSCCH may be transmitted through a specific single RBS index (e.g., lowest RBS index among RBSs that succeeds in channel occupancy) although the LBT is successful on the plurality of RBSs (Fallback)(option 1).

As another example, when LBT is successful on adjacent RBSs, an operation in which the PSCCH is transmitted through a single RBS (option 1) or an operation in which the PSCCH is duplicated and then transmitted through each RBS (option 2) may be indicated through at least one of SCI and MAC CE. Also, for example, the aforementioned operation may be configured in advance. As another example, when specific configuration or signaling is absent, a specific operation among the aforementioned operations may be configured as a default operation (e.g., option 1), but is not limited to a specific embodiment.

Also, for example, four RBSs may be configured in a single resource pool. However, it is only an example for clarity of description and is not limited to the aforementioned embodiment. Also, for example, the interlace index and the subchannel index may be assigned based on 1:1 relationship, but may not be limited thereto. Here, the UE may independently perform an LBT procedure for each frequency band corresponding to each RBS in the unlicensed band. Here, a PSCCH/PSSCH resource area may be different based on LBT performance results. For example, resource assignment may be performed based on consecutive subchannels in the SL unlicensed band. As another example, interlace-based resource assignment may be configured or defined in addition to a consecutive subchannel-based resource assignment method in the SL unlicensed band. Here, it may be applied to satisfy regulations such as PSD/OCB for the unlicensed band described above, but may not be limited to a specific embodiment.

Therefore, when at least one subchannel is scheduled within a single RBS, PSSCH resources (e.g., subchannel unit) may be assigned at constant frequency intervals (e.g., every M interlaces) across the entire band within the RBS. The following description is made based on a case of performing SL transmission and reception in adjacent RBSs. Here, as described above, resources in a guard band between RBSs may be utilized when consecutive RBSs occupy a channel. Therefore, since the UE may perform SL transmissions on as many consecutive frequency resources as possible, frequency use efficiency and transmit power efficiency may be improved. The following description is made based on a case of performing SL transmission in consecutive adjacent RBSs, but may not be limited thereto.

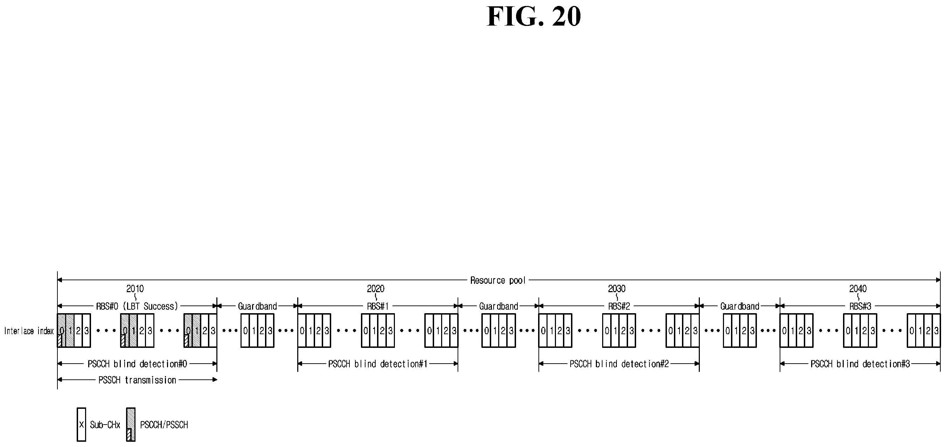

FIG. 20 illustrates a case in which a plurality of RBSs are configured in a single resource pool according to an embodiment. Referring to FIG. 20, the UE may succeed in LBT in RBS#0 2010. The UE may use associated #0 and #1 within RBS#0 2010 for PSCCH/PSSCH transmission. Here, PSCCH resource assignment may be limited within each RBS to minimize blind decoding and power consumption. That is, determination may be made by the Tx UE according to the proposed method such that the PSCCH is assigned only to the RBS#0 2010. Here, the Rx UE may perform blind detection for PSCCH reception for each subchannel assigned within each RBS excluding a guard band in four RBSs 2010, 2020, 2030, and 2040 configured in a resource pool. As another example, the Rx UE may perform blind detection for PSCCH reception every interlace resources associated with each subchannel assigned within each RBS excluding the guard band in the four RBSs 2010, 2020, 2030, and 2040 configured in the resource pool. That is, the Rx UE may perform PSCCH reception without increasing complexity of blind detection regardless of LBT results performed by the Tx UE. As still another example, as described above, when the PSCCH is configured to be transmitted only in a specific RBS according to the proposed method, the Rx UE may perform blind decoding for PSCCH reception only in the specific RBS among the configured RBSs.

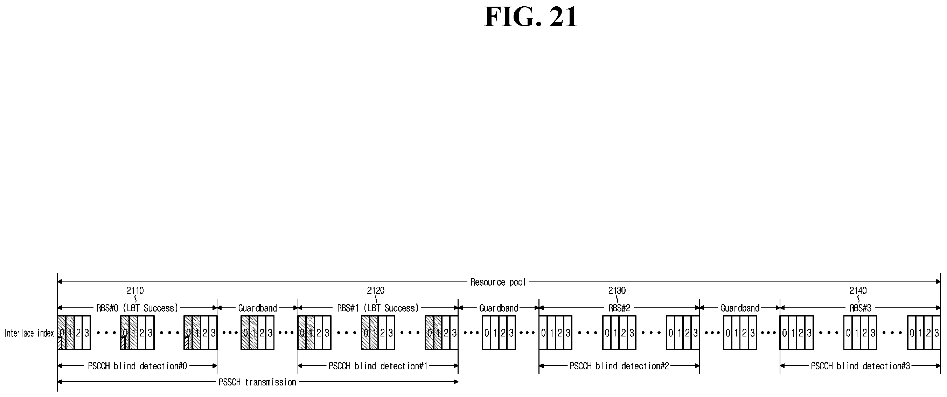

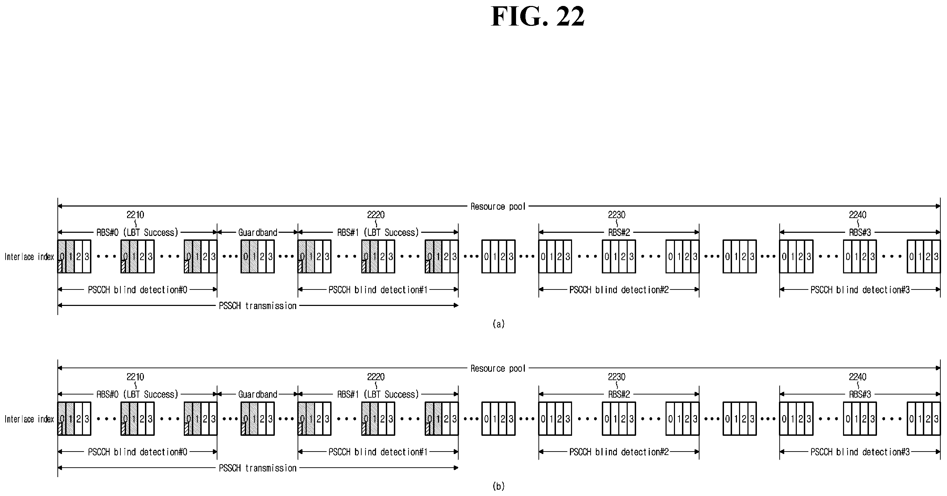

FIGS. 21 and 22 illustrate a case in which a plurality of RBSs are configured in a resource pool according to an embodiment. Referring to FIG. 21, LBT was successful in two adjacent RBSs (i.e., RBS#0 2110 and RBS#1 2120), which differs from FIG. 20. Here, since the Rx UE is incapable of recognizing information regarding whether LBT of the Tx UE is successful, the Rx UE may perform blind detection assuming limited PSCCH transmission within LBT BW (RBS). Here, for example, the Tx UE succeeds in LBT in two consecutive RBSs 2110 and 2120, but may perform PSCCH transmission only within a single specific RBS. Here, PSCCH transmission resources may be lowest interlace RBs associated with the lowest subchannel index within the RBS. However, it is only an example and PSCCH transmission resources may be assigned to specific another subchannel index and another interlace RB index.

As another example, referring to (a) of FIG. 22, the Tx UE may succeed in LBT in two consecutive RBSs 2210 and 2220 and may perform PSCCH transmission within each RBS. Here, PSCCH transmission resources may be lowest interlace RBs associated with the lowest subchannel index within each RBS. However, it is only an example and PSCCH transmission resources may be assigned to specific another subchannel index and another interlace RB index.

As still another example, referring to (b) of FIG. 22, when at least one RBS is configured in frequency and PSSCH transmission is performed in one or more adjacent RBSs, a method of sequentially assigning interlace RBs associated with the specific same subchannel index (e.g., lowest subchannel index among PSSCH scheduling subchannels) among scheduled subchannels for PSSCH between the adjacent RBSs for PSCCH transmission may be applied. That is, unlike the aforementioned option 1 and option 2 related to PSCCH blind decoding, a single PSCCH may be transmitted in adjacent RBSs. Here, from the Rx UE's perspective, the Rx UE may not know in advance in which RBS the LBT is successful and SL data transmission is performed by the Tx UE. Therefore, the complexity for blind decoding for PSCCH decoding may increase. However, since constraint for PSSCH scheduling that requires at least larger resources than PSCCH transmission resources may disappear, the aforementioned method may be applied in consideration of tradeoff.

In detail, for example, when the LBT is successful in the RBS #0 2210 and the RBS #1 2220 for PSSCH scheduling, PSSCH transmission may be performed using specific subchannels among subchannel and associated interlace RBs present within the RBS#0 2210 and the RBS#1 2220 and between the RBS#0 2210 and the RBS#1 2220 (whether to use resources within guard band between adjacent RBS#0 and 1 may be determined or configured in advance). Here, the PSCCH may be transmitted by assigning interlace RBs associated with the lowest subchannel index corresponding to the number of PSCCH RBs among subchannels assigned for PSSCH transmission within each RBS. That is, PSCCH RBs may be assigned between the RBS #0 2210 and the RBS #1 2220. For example, PSCCH RB resource assignment may be performed for PSCCH every interlace RB sequentially starting from the lowest frequency, but may not be limited to a corresponding embodiment.

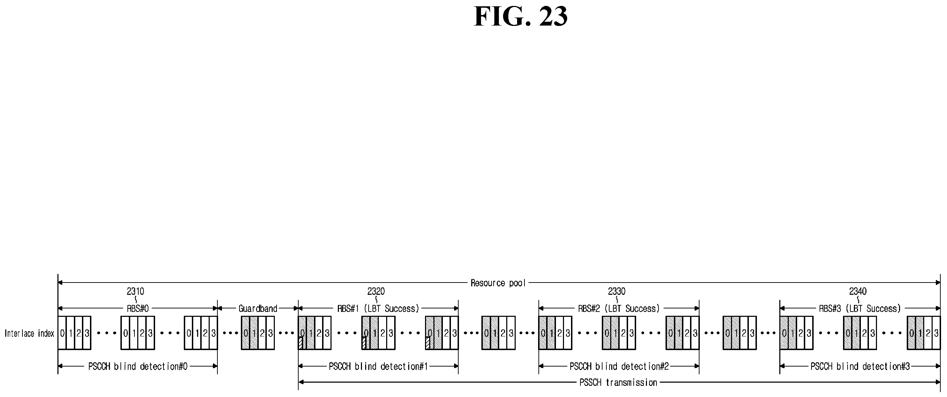

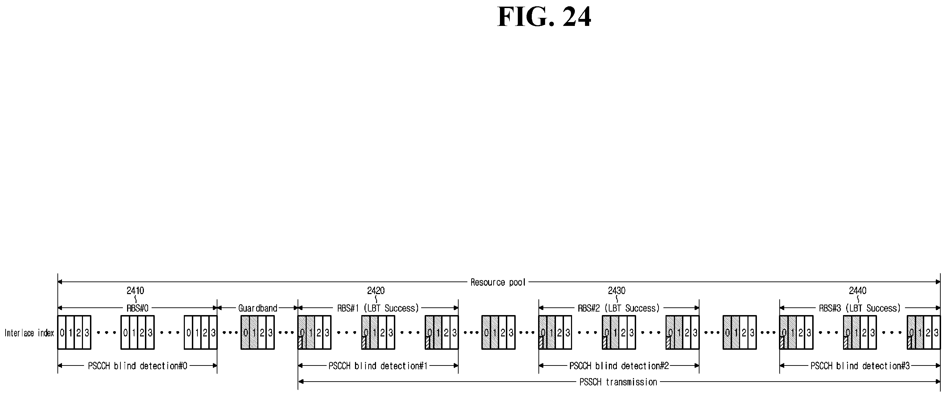

FIGS. 23 and 24 illustrate a case in which a plurality of RBSs are configured in a resource pool according to an embodiment. Referring to FIG. 23, the UE may succeed in LBT in three RBSs (RBS#1, RBS#2, and RBS#3) 2320, 2330, and 2340. Here, PSCCH/PSSCH transmission may be performed in the lowest RBS among the RBSs (2320, 2330, and 2340) that succeed in the LBT. Also, PSCCH transmission resources may be assigned starting from the lowest subchannel index and the lowest interlace RB index associated with the lowest subchannel index within the RBS.

On the other hand, referring to FIG. 24, the UE may succeed in the LBT three RBSs (RBS#1, RBS#2, and RBS#3) 2420, 2430, and 2440. Here, PSCCH/PSSCH transmission may be performed in each of the RBSs 2420, 2430, and 2440 that succeed in the LBT. PSCCH transmission resources may be assigned starting from the lowest subchannel index and the lowest interlace RB index associated with the lowest subchannel index within each RBS.

That is, when LBT is success in consecutive RBSs (i.e., when LBT is success in one or more consecutive RBSs), PSSCH transmission resources may be transmitted by additionally using resources within the RBS that succeeds in LBT and frequency resources present in the guard band between the adjacent RBSs that succeed in the LBT. On the other hand, PSCCH transmission resources may be assigned only within each RBS frequency resource within an actually scheduled PSCCH resource area, which differs from the PSSCH resource assignment method. Through this, it is possible to prevent increase in blind decoding and increase in power consumption.

PSCCH resource **assignment considering subchannel/interlace RB**

For example, a subchannel may be configured through inconsecutive interlace-based RBs, and the PSCCH resource assignment method may be required in an inconsecutive interlace RB-based subchannel. Here, the resource assignment method may be performed within a slot that includes a subchannel-interlace RB unit for the PSCCH resource assignment, but may not be limited thereto.

For example, as described above, radio resource for PSCCH transmission may be determined as a specific single RBS among RBSs that succeed in LBT or may be determined within each RBS based on an LBT success status of RBS within the resource pool.

In the following, which resource within scheduled resources is used to perform PSSCH transmission is described. Here, for example, Table 20 and Table 21 show the number of subchannels per RBS, the number of interlaces per subchannel, the number of interlaces (M), and the number of RBs per interlace (N) based on subcarrier spacing, and resources for PSCCH transmission are described in consideration of Table 20 and Table 21.

[Table 20]

| Number of subchannels per RBS | Number of interlaces per subchannel | Number of interlaces (M) | Number of RBs per interlace (N) |
|---|---|---|---|
| 10 | K=1 | 10 | 10 or 11 |
| 5 | K=2 | 10 | 10 or 11 |
| 2 | K=5 | 10 | 10 or 11 |
| 1 | K=10 | 10 | 10 or 11 |

[Table 21]

| Number of subchannels per RBS | Number of interlaces per subchannel | Number of interlaces (M) | Number of RBs per interlace (N) |
|---|---|---|---|
| 5 | K=1 | 5 | 10 or 11 |
| 1 | K=5 | 5 | 10 or 11 |

Subchannel and interlace RB frequency resource assignment for PSSCH transmission may be provided to the Rx UE through SCI signaling. On the other hand, PSCCH frequency resources may be assigned based on higher layer parameters, which may be as shown in Table 17 above. For example, parameter values of Table 17 may be values provided by higher layer parameters. For the number of PSCCH transmission RBs related to the frequency domain, a single value among {10, 12, 15, 20, 25} PRB values may be provided in advance and set in the UE. As another example, the number of PSCCH transmission RBs may be set to another value, and is not limited to a specific embodiment.

Here, for example, PSCCH assignment may be limited within the lowest single subchannel among scheduled subchannels in consideration of the number of PSCCH RBs. However, as described above, in consideration of unlicensed band operation, a method of assigning the PSCCH in at least one subchannel may be considered instead of assigning the PSCCH only within the lowest single subchannel among the scheduled subchannels. Here, for example, a method of assigning the PSCCH in at least one subchannel may be considered based on the aforementioned regulation and interlace-based structure required in the unlicensed band.

In detail, for 20 MHz unlicensed band/channel (LBT BW=RBS), the interlace RB structure to be applied may be determined based on an SCS value and a PSD/OCB status. For example, the interlace RB structure to be applied may be semi-statically determined. However, semi-statically applying the interlace RB structure may decrease flexibility in configuration. The number of subchannels or the number of interlace RBs per subchannel may be limited due to the interlace RB structure, which may affect granularity and flexibility for scheduling assignment. On the other hand, for the number of RBs for PSCCH transmission, an amount of resources may be determined by basically considering PSCCH reception performance. Therefore, a main factor that determines the number of RBs may be a PSCCH coding rate and the number of RBs for reliable PSCCH reception may be appropriately set. Considering the above, the PSCCH resource assignment method may differ from the existing method due to structure and configuration in unlicensed carrier, which is described below.

For example, PSCCH resource assignment may be performed based on the number of PSCCH RB resources and the number of interlace RBs per subchannel. In detail, a case in which the number of interlace RBs per subchannel is equal to or greater than the number of PSCCH RBs (hereinafter, Case 1) and a case in which the number of interlace RBs per subchannel is less than the number of PSCCH RBs (hereinafter, Case 2) may be considered. Here, for example, a case in which PSCCH monitoring is configured or determined in advance by higher layer to be performed in units of at least one subchannel may be considered.

Also, as a basic frequency unit of blind decoding, a subchannel number unit greater than one may be set through higher layer parameter for each resource pool. In detail, for example, the UE that performs SL communication may assign PSCCH frequency resources within at least one of lowest two subchannel and interlace indexes in scheduled frequency resources for SL data transmission. Here, unlike the existing operation of performing blind decoding every single subchannel, the Rx UE may perform blind decoding for PSCCH reception every two subchannels. In this case, there may be constraint that resources for PSSCH transmission need to use at least two subchannels, but there is also advantage of allowing more flexible PSCCH resource assignment.

Here, in Case 1, the number of interlace RBs per subchannel may be equal to or greater than the number of PSCCH RBs and accordingly, the PSCCH may be assigned within a single subchannel. That is, RB resources for PSCCH transmission may be assigned to interlace RBs included in the lowest single subchannel among scheduled subchannels. Here, the lowest single subchannel is only a single example and may not be limited thereto. Another specific subchannel index may be used as a standard.

On the other hand, in Case 2, the number of interlace RBs per subchannel is less than the number of RBs configured or determined for PSCCH transmission. That is, it may be a case in which a larger number of PSCCH RBs than the number of interlace RBs present within a single subchannel is required. Here, Case 2 may be applied when PSCCH monitoring is configured or determined in advance by higher layer to be performed in every one or more subchannels. In detail, for example, a case in which the number of interlace RBs per one subchannel is less than the number of PSCCH RBs required for reliable PSCCH reception may be considered. Referring to Table 20 and Table 21 described above, the number of interlace RBs per subchannel may be 10 or 11. On the other hand, for the number of PSCCH RBs, a single value among 12, 15, 20, 25 PRBs may be set among higher layer parameters of Table 17. That is, a case in which the number of PSCCH RBs is greater than the number of interlace RBs per subchannel may be considered. Since a larger number of RBs than the number of PSCCH RBs may be required for successful PSCCH reception, there may be a limitation in performing transmission based on a single subchannel.

For example, a blind monitoring unit for PSCCH reception may be configured at least for each resource pool to have one or more subchannels through higher layer parameters. That is, a case in which the blind monitoring unit for PSCCH reception is not a single subchannel may be considered. Here, for example, the PSCCH may be transmitted through sequential assignment from the lowest subchannel index within the scheduled SL PSSCH resource to a subchannel index corresponding to the number of subchannels for configured PSCCH monitoring. For example, PSCCH transmission may be performed by being assigned to the lowest two subchannel indexes within the PSSCH resource area scheduled for SL data transmission. The Rx UE may verify the blind monitoring unit for PSCCH reception (i.e., the number of subchannels indexes used for single PSCCH assignment) through higher layer parameter or predetermined value. Here, the resource unit may be the number of subchannels or the number of interlace RBs and may be provided as one or more possible values.

In the following, a method of assigning PSCCH RB in consideration of Case 1 and Case 2 is described. For example, from perspective of defining a wireless interface for SL transmission and reception in the unlicensed band, a new frequency resource assignment method needs to be defined and is described in this regard.

For example, PSCCH resource assignment may be performed within an RBS selected for scheduled PSSCH transmission. The PSCCH may be set from the lowest interlace RB index(es) included in the lowest subchannel index(es) within the RBS and may be assigned to resources corresponding to the number of consecutive interlaces (or number of RBs). As another example, PSCCH assignment may be performed from the highest subchannel index(es) or arbitrary subchannel index rather than the lowest subchannel index(es)/interlace RB index(es) within the RBS and is not limited to a specific embodiment. Here, when the PSSCH/PSCCH is assigned to one or more subchannels, the PSCCH may be assigned from the lowest subchannel to a subchannel corresponding to a configured monitoring number.

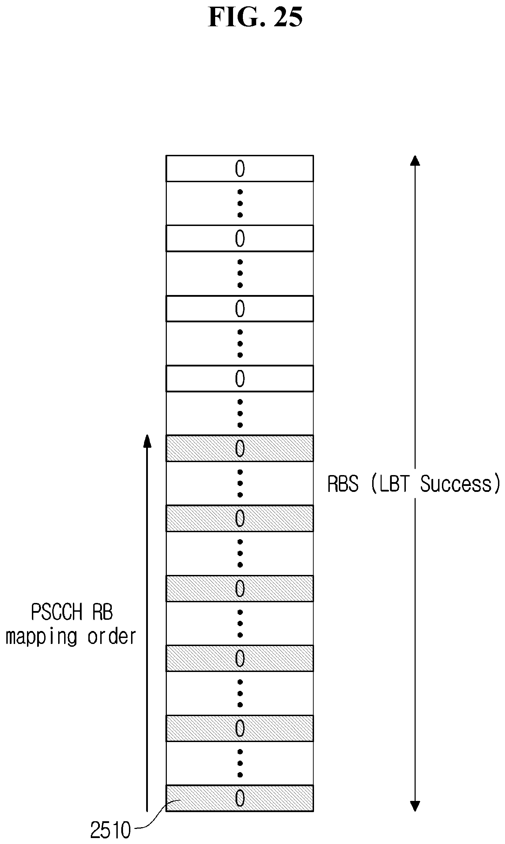

FIG. 25 illustrates a method of assigning PSCCH RB based on an associated interlace within a single subchannel according to an embodiment.

Referring to FIG. 25, subchannel index #0 may be scheduled for PSSCH transmission within a single RBS. Here, the number of interlaces per single subchannel may be one. The subchannel index #0 may be configured to be associated with interlace RBs corresponding to interlace index #0. Also, a case in which the number of interlaces M is 10 and 10 interlaces are present within a single RBS may be considered. Also, the number of RBs associated with a single interlace index may be 10 (100 RB/20 MHz). Here, a case in which the number of PSCCHs is 6 may be considered. That is, as Case 1 described above, it may be a case in which the number of PSCCH RBs is less than the number of interlace RBs per subchannel. However, FIG. 25 is only an example for clarity of description and may not be limited to the aforementioned embodiment. Six PSCCHs may be sequentially assigned starting from an interlace RB 2510 with lowest subchannel/interlace index within PSCCH assignment resources. Since the number of interlace RBs is greater than the number of PSCCH RBs, the number of PSCCH RBs may be assigned to the interlace RBs, respectively.

Here, for example, when PSCCH resources are assigned within a single RBS, PSCCH resource assignment may be performed in consideration of at least one of the number of PSCCH RBs, the number of interlaces per subchannel (K), the number of RBs per interlace, and the number of interlaces (M). The UE may verify and set information on at least one of the number of PSCCH RBs, the number of interlaces per subchannel (K), the number of interlaces (M), the number of RBs per interlace, the number of PSCCH assignment units, and inconsecutive PSCCH RB configuration status through higher layer parameters, which may be as shown Table 22. The number of interlaces (M) may be determined without higher layer signaling configuration based on an SCS and an RBS size associated with SL carrier/BWP in which the resource pool is configured, which may be as shown in Table 19 and 20 described above. Also, if corresponding configuration is absent, the number of PSCCH allocation units may be set as a single subchannel (or single interlace) as a default value. On the contrary, if configuration for the number of PSCCH allocation units is present, the number of PSCCH allocation units may be differently determined according to the corresponding configuration. Also, if configuration for the inconsecutive PSCCH RB configuration status is absent, consecutive interlace indexes/RBs may be configured as a standard as shown in FIG. 25. On the contrary, if the configuration for the inconsecutive PSCCH RB configuration status is present, it may operate based thereon and description related thereto is made below. This interlace RB assignment method may be applied to each RBS and performed.

[Table 22]

| |
|---|
| Number of PSCCH RBs |
| Number of interlaces per subchannel (K) |
| Number of interlaces (M) |
|     May be determined without higher layer configuration based on SCS and RBS size set to resource pool. |
| Number of PSCCH assignment units |
|     Without this configuration, PSCCH is assigned within single basic subchannel (or single interlace). |
| Inconsecutive PSCCH RB configuration status |
|     PSCCH RB is assigned according to Alternative 1 or Alternative 2 below. |
| • Without this configuration, PSCCH RB is assigned to interlace RB. |

Here, PSCCH resources may be performed based on higher layer parameters of Table 22 and scheduled PSSCH frequency resources. That is, PSCCH RB assignment may be performed based on higher layer parameters of Table 22 and subchannel index (or interlace index). Here, the PSCCH RB may be assigned starting from the lowest subchannel index and the lowest interlace RB associated with the lowest subchannel index. Also, the PSCCH RBs may be consecutively assigned to the same interlace index RBs starting from the lowest frequency RB within the lowest interlace RB index. Here, if the number of PSCCH RBs is greater than the number of RBs within the lowest subchannel/interlace, as many PSCCH RBs as the number of PSCCH RBs may be assigned starting from the lowest RB within a subsequent subchannel/interlace index. Also, if the number of PSCCH RBs is greater than the number of all interlace RBs associated with a single subchannel, the PSCCH RB may be assigned following the subsequent lowest subchannel index among PSSCH resources scheduled within the same RBS. That is, the PSCCH may be assigned within the lowest index among subchannels to which the scheduled PSSCH is assigned in consideration of complexity in PSCCH blind decoding of the Rx UE. However, if the number of subchannels assigned to PSSCH is greater than one and the number of RBs within a single subchannel is less than the PSCCH, the PSCCH may be assigned in the same manner starting from an interlace RB within a subsequent subchannel. Also, as another method, when the PSSCH is scheduled in at least one RBS as described above, the PSCCH may also be assigned between adjacent RBSs according to higher layer configuration using the proposed assignment method.

Also, for example, the PSCCH may be transmitted within an RBS selected for scheduled PSSCH transmission. Here, PSCCH resources may be assigned to resources corresponding to the number of configured inconsecutive interlaces (or number of RBs) starting from the lowest interlace RB included in the lowest subchannel. For example, the PSCCH may be assigned starting from both end of the RBS among associated interlace RBs within a subchannel corresponding to PSCCH transmission resource.

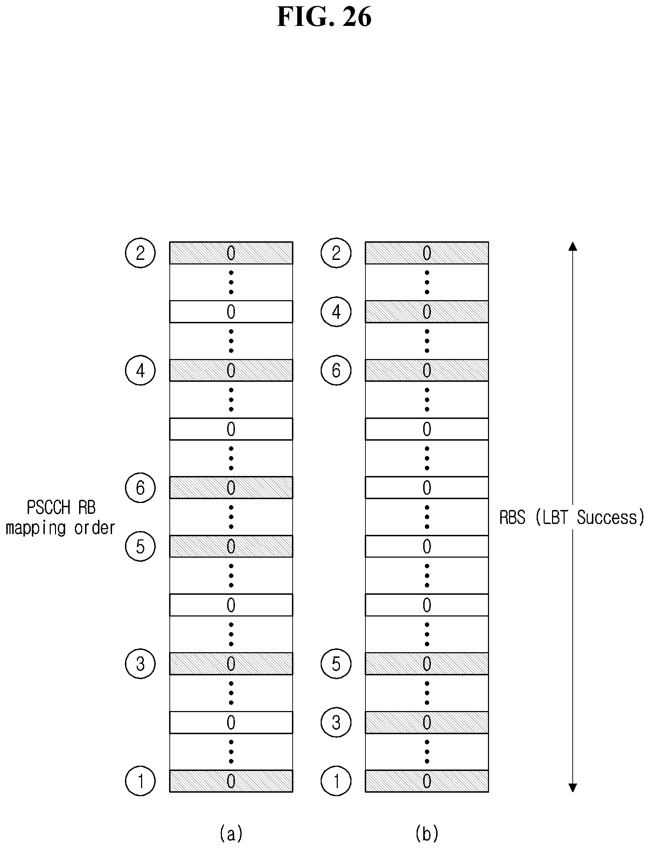

FIG. 26 illustrates a method of assigning PSCCH RBs based on associated interlace within a single subchannel according to an embodiment. Referring to FIG. 26, the PSCCH may be transmitted within an RBS selected for scheduled PSSCH transmission. Here, PSCCH resources may be assigned in an associated interlace RB within a specific subchannel (e.g., lowest subchannel index). However, the mapping order of PSCCH resources may differ from FIG. 25. For example, to maximally acquire PSCCH frequency diversity gain, PSCCH resources may be assigned to PSCCH RBs from both ends of the RBS frequency in consideration of the number of PSCCH RBs.

In detail, referring to (a) of FIG. 26, as many resources as the number of PSCCH RBs may be assigned to maintain a spacing from the associated interlace RBs present at both ends of frequency based on a specific subchannel index within the RBS (hereinafter, Alternative 1). As another example, as many resources as the number of PSCCH RBs may be assigned starting with the associated interlace RBs present at both ends of the frequency based on a specific subchannel index within the RBS (hereinafter, Alternative 2). That is, compared to FIG. 25, in FIG. 26, assignment order between interlace RBs within a single subchannel may be differently configured to maximize PSCCH frequency diversity gain instead of assigning PSCCH to RBs within consecutive interlaces. Other configuration may be the same as in FIG. 25. Here, if the number of subchannels assigned to PSSCH is greater than one and the number of RBs within a single subchannel is less than PSCCH, PSCCH assignment may be additionally performed according to the method of FIG. 26 starting from an interlace RB within a subsequent subchannel.

A method for PSSCH assignment in the frequency domain is described above. Here, the number of OFDM symbols used to perform PSCCH transmission in the time domain may be determined for each PSCCH transmission slot according to higher layer configuration. Also, in PSCCH assignment in the time domain, a start OFDM symbol location may be assigned from a second symbol to the set number of symbols at all times, regardless of whether an AGC symbol is present. As another example, the start OFDM symbol location for PSSCH transmission may be flexibly changed based on presence status of the AGC symbol for each slot. In detail, for example, in the case of a slot without the AGC symbol, PSCCH transmission may be assigned and performed starting from a first OFDM symbol of the slot. For example, in a situation in which PSSCH/PSCCH transmission is performed through consecutive slots in sidelink of the unlicensed band, the presence status of the AGC symbol may be signaled and changed. In consideration of the above, PSCCH assignment in the time domain may also be changed as described above.

Also, a start OFDM symbol of a PSCCH transmission symbol may be determined depending on whether sub-slot-based sidelink transmission and reception (sub-slot based SL communication) is applied. That is, unlike the existing sidelink transmission and reception structure of performing slot-based sidelink transmission and reception, if data transmission and reception is applied based on a sub-slot unit in the sidelink unlicensed band (SL-U), PSCCH/PSSCH transmission may be possible from the middle of sidelink slot or specific OFDM symbol index. In this case, the PSCCH start OFDM symbol may also be determined and used as a specific OFDM symbol according to the aforementioned configuration, scheduling, and LBT results.

Here, a PSCCH transmission method in the time domain may be applied with the aforementioned PSCCH transmission in the frequency domain and may not be limited to a specific PSCCH transmission method. That is, the PSCCH transmission method in the time domain may not be limited to a specific method among the aforementioned PSCCH transmission methods in the frequency domain and may be applied with each PSCCH transmission method in the frequency domain.

**2ⁿᵈ SCI mapping method**

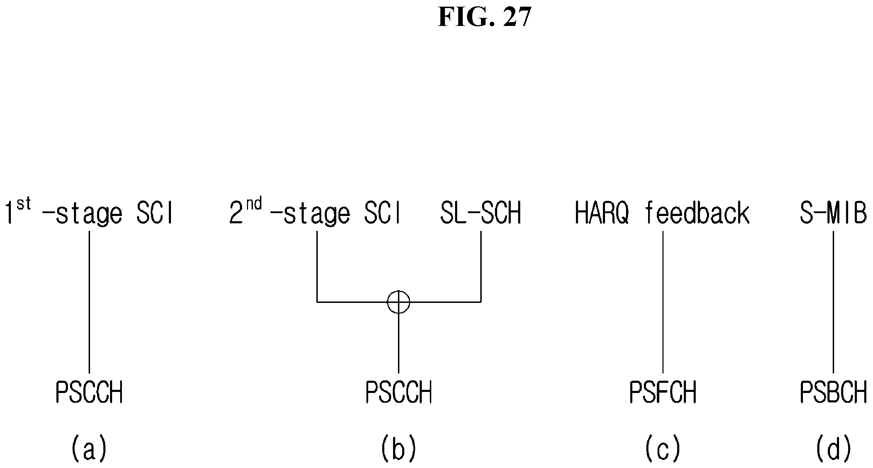

FIG. 27 illustrates an SL channel according to an embodiment. Referring to (a) of FIG. 27, 1st SCI may be transmitted through PSCCH. On the other hand, referring to (b) of FIG. 27, 2nd SCI may be assigned and transmitted within PSSCH resources with SL-SCH (SL Data). Also, referring to (c) of FIG. 27, HARQ feedback may be transmitted through physical sidelink feedback channel (PSFCH). Referring to (d) of FIG. 27, S-MIB may be transmitted through physical sidelink broadcast channel (PSBCH). Here, 2nd SCI may not be assigned to resources to which signals for other SL transmission and reception (e.g., SL CSI-RS, PT-RS, DMRS, SL Sync. Signal, PSBCH, PSFCH, PSCCH) are assigned. 2nd SCI mapping may be performed in consideration of the aforementioned PSSCH/PSCCH assignment method. For example, 2nd SCI may be transmitted within an RBS determined for PSCCH and may be transmitted based on at least one of the same subchannel and interlace RB. Here, 2nd SCI may not be assigned to the same resource element (RE) and may be assigned to a specific resource within a physical resource area in which PSSCH is scheduled. For example, as described above, 2nd SCI may not be assigned to a resource to which DMRS, PT-RS, CSI-RS, or PSCCH for sidelink is assigned within a single slot. Therefore, assignment may be performed within a remaining resource area excluding a resource area in which DMRS, PT-RS, or PSCCH is assigned within a physical resource area determined for PSSCH transmission. That is, 2nd SCI may be assigned and transmitted with PSCCH in the same resource as RBS, subchannel, or interlace RB to which the PSCCH is assigned.

For example, 2nd SCI may be assigned within remaining scheduling resources based on an assignment method within an associated subchannel according to a PSCCH assignment method. In detail, 2nd SCI may start assignment in a RE excluding resources used for associated DMRS, PT-RS, CSI-RS, or PSCCH transmission, starting from a first PSSCH symbol and starting from a scheduled resource index. That is, assignment may start in REs excluding REs within the interlace RB used for associated DMRS, PT-RS, CSI-RS, or PSCCH transmission. Here, 2nd SCI resource assignment may be performed according to a different method within a subchannel or an interlace RB in consideration of at least one of PSCCH, associated DMRS, PT-RS, CSI-RS assignment method, and CRB-interlace-subchannel frequency configuration.

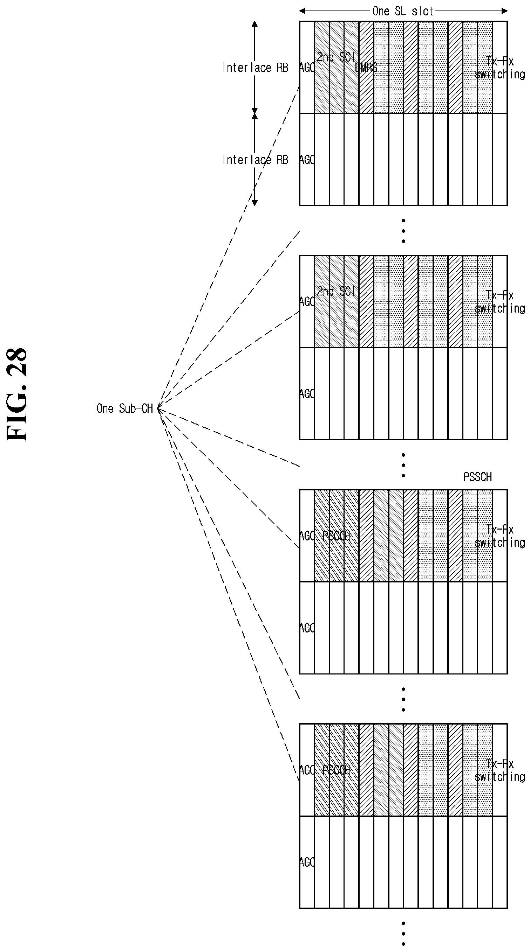

FIG. 28 illustrates a 2nd SCI resource assignment method according to an embodiment. Referring to FIG. 28, PSCCH (1st SCI) may be assigned from the lowest interlace RB associated with a single subchannel corresponding to the lowest subchannel index within scheduled resources. Here, PSCCH assignment may be sequentially performed as many as the number of consecutive interlace RB indexes according to the number of PSCCH RBs. Here, if there are an interlace RB and a RE to which PSCCH is not assigned in the same OFDM symbol, 2nd SCI may be assigned starting from corresponding resources. 2nd SCI may be sequentially assigned in order of interlace RBs within an associated subchannel starting from the aforementioned resource. That is, it may be assigned from low frequency RE to high frequency RE.

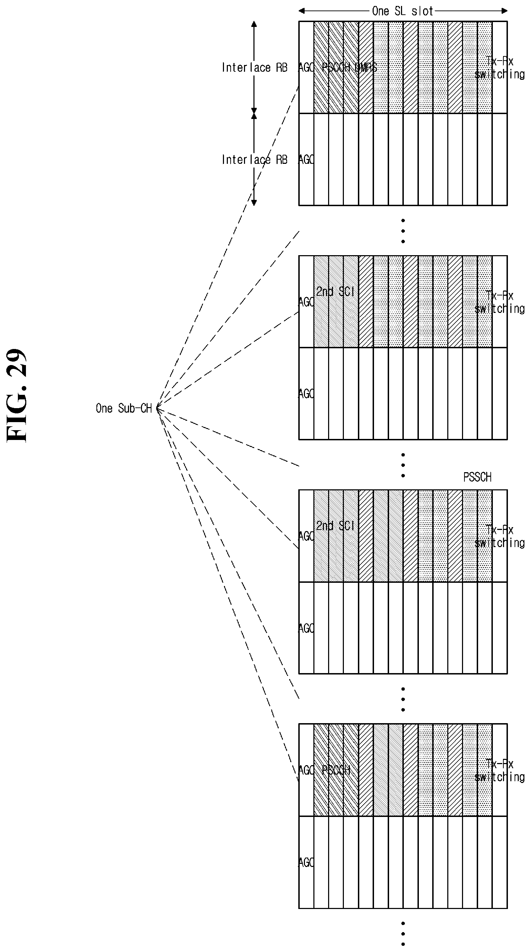

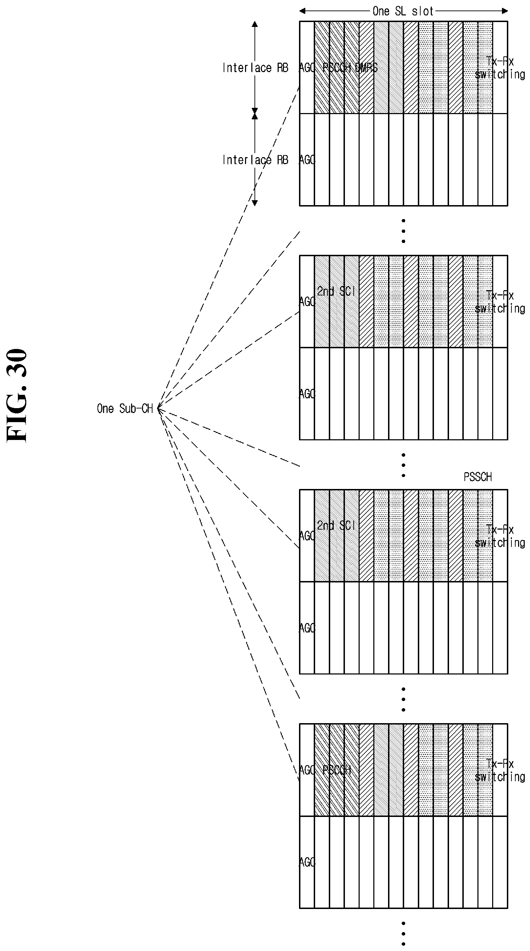

FIGS. 29 and 30 illustrate a 2nd SCI resource assignment method according to an embodiment.

Referring to FIGS. 29 and 30, PSCCH assignment may be performed based on the aforementioned method 2. For example, PSCCH resources may be sequentially assigned from both ends of frequency starting from the lowest subchannel index/lowest interlace index within scheduled resources. When PSCCH is assigned and RB/RE for 2nd SCI assignment is present within the same subchannel/interlace/OFDM symbol to which PSCCH is assigned in physical resources in which the PSSCH is scheduled, 2nd SCI may be assigned starting from the lowest frequency RB/RE among corresponding RBs/REs. Then, 2nd SCI may sequentially perform assignment in subsequent OFDM symbol order. Here, the 2nd SCI assignment method may perform assignment based on at least one of the aforementioned method 1 and method 2, which are assignment methods proposed for PSCCH assignment, starting from a first RB/RE within a first OFDM symbol within scheduled physical resources.

In detail, for example, referring to FIG. 29, PSCCH may be sequentially assigned from both ends of frequency, starting from the lowest subchannel index/lowest interlace index within scheduled resources. On the other hand, 2nd SCI may be sequentially assigned starting from the lowest subchannel index/lowest interlace index within resources to which PSCCH is scheduled. Also, referring to FIG. 30, all of PSCCH and 2nd SCI may be sequentially assigned from both ends of frequency, starting from the lowest subchannel index/lowest interlace index within resources to which PSCCH is scheduled. For example, assignment of PSCCH may be performed starting from the lowest subchannel index/ lowest interlace index based on one of the proposed methods and then, transmission thereof may be performed in resources within corresponding index available in the same OFDM or subsequent OFDM symbol for 2nd SCI assignment.

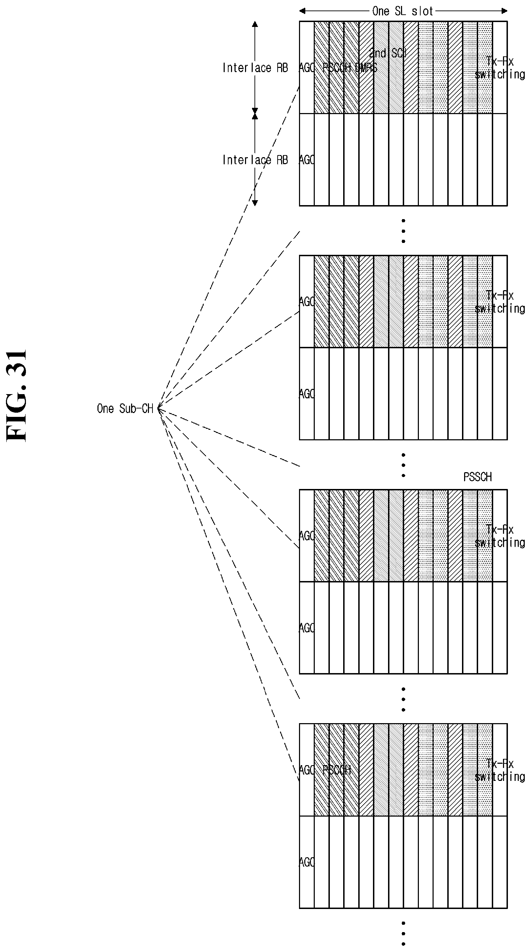

Also, FIG. 31 illustrates a method of assigning 2nd SCI according to an embodiment. Referring to FIG. 31, PSCCH assignment and 2nd SCI assignment may apply only time division multiplexing (TDM). Here, 2nd SCI may be performed within scheduled resources from a subsequent OFDM symbol to which PSCCH is assigned. Here, the 2nd SCI assignment may be performed based on one of the aforementioned methods for PSCCH assignment.

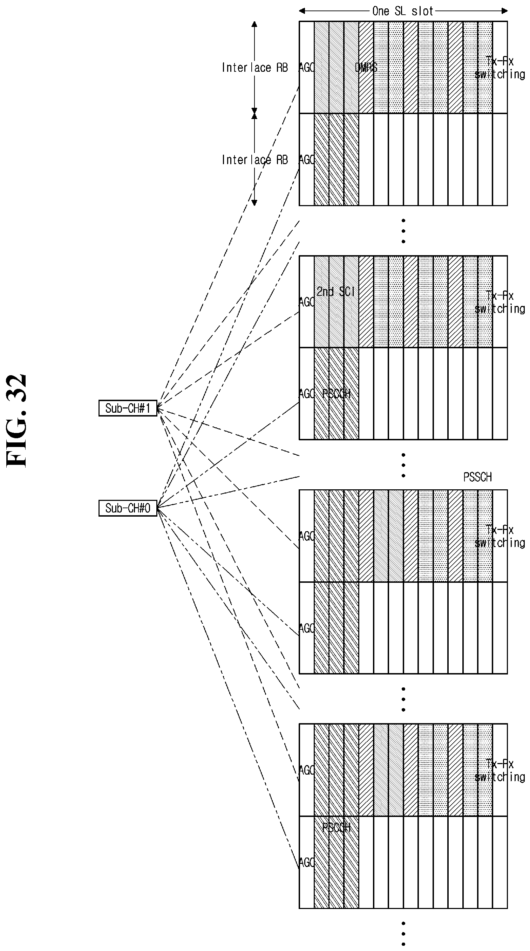

As another example, a case in which the PSCCH and 2nd SCI assignment is performed within a plurality of subchannels may be considered. For example, the PSCCH may be assigned in the plurality of subchannels based on higher layer configuration or as predetermined. Here, FIG. 32 illustrates a method of assigning 2nd SCI based on the plurality of subchannels according to an embodiment. Referring to FIG. 32, for PSCCH assignment, assignment may be performed as many as the number of PSCCH interlace index RBs within two subchannels. Referring to FIG. 32, subchannel#0 and subchannel#1 within a scheduled PSSCH resource area may be considered. Here, sequential frequency domain assignment may be performed first starting from the first OFDM symbol, the lowest subchannel index, and the lowest interlace RB and then time domain assignment may be performed. Here, since PSCCH assignment is performed within two subchannels in the frequency domain, two methods may be considered. For example, a method of assigning the subchannel index and then assigning subsequent subchannel index/interlace RB index resources may be considered. That is, within the scheduled PSSCH resource area, PSCCH and 2nd SCI resources may be assigned to the lowest subchannel index/interlace RB index. Then, PSCCH and 2nd SCI resources may be assigned in order corresponding to the subchannel index/interlace RB index. That is, PSCCH and 2nd SCI resources may be assigned from resources corresponding to the lowest subchannel index#0/interlace RB index #0 among scheduled subchannels. If an RB for additional PSCCH assignment remains, PSCCH and 2nd SCI resources may be assigned from resources corresponding to a subsequent subchannel, subchannel #1/interlace RB index#1.

As another example, PSCCH and 2nd SCI may be assigned to the corresponding subchannel index/interlace RB index resources based on lowest frequency resource. That is, it may start from the lowest subchannel index/interlace RB index within the scheduled PSSCH resource area. However, PSCCH and 2nd SCI resource assignment may be performed in order of a plurality of subchannels/interlace RBs, PSCCH resource assignment unit, starting from lowest frequency resources in the frequency domain, rather than in order of resources corresponding to the subchannel or interlace RB. In detail, referring to FIG. 32, PSCCH assignment may preferentially start from the lowest subchannel index#0 within the scheduled resource area (subchannel#0/1). That is, from perspective of the frequency domain, assignment may be sequentially performed to physical resources corresponding to two lowest subchannel indexes corresponding to PSCCH assignment, starting from the lowest RB/RE index.

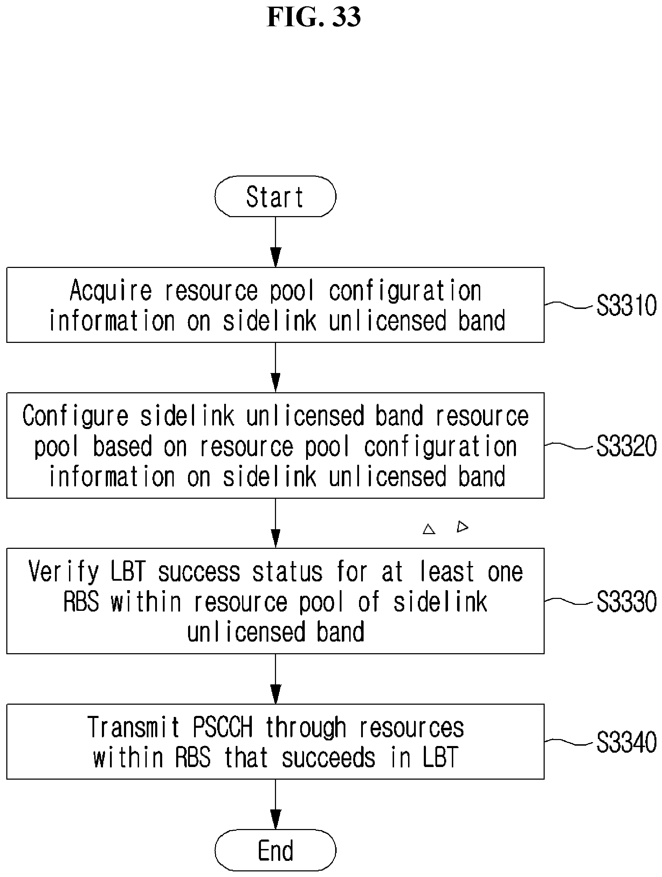

FIG. 33 is a flowchart illustrating a PSCCH resource assignment method applied to the present disclosure.

Referring to FIG. 33, a UE may acquire resource information on a sidelink unlicensed band of a single carrier bandwidth (S3310). Here, resource pool information for the sidelink unlicensed band may be provided to the UE based on at least one of RBS configuration/index information and interlace/subchannel-based configuration information. Then, the sidelink unlicensed band resource pool may be configured based on resource pool configuration information of the sidelink unlicensed band (S3320). Here, at least one RBS may be configured within a resource pool of the SL unlicensed band and an LBT success status of each RBS may be verified (S3330). Then, PSCCH resources may be assigned to at least one RBS that succeeds in LBT and PSCCH transmission may be performed (S3340). Here, PSCCH resources may be assigned only to a single RBS as a specific RBS among at least one RBS that succeed in LBT. For example, the specific RBS may be an RBS with the lowest RBS index among the at least one RBS that succeed in LBT, but is not limited to a specific embodiment. That is, PSCCH resources may be included in only any one RBS among the RBSs that succeed in LBT. Through this, it is possible to prevent an increase in blind decoding an increase in power consumption.

As another example, PSCCH resource may be assigned to each of the at least one RBS that succeed in LBT. For example, the PSCCH resource may be determined based on a single RBS and the same PSCCH may be assigned to other RBSs through PSCCH duplication. Through this, it is possible to prevent an increase in blind decoding an increase in power consumption.

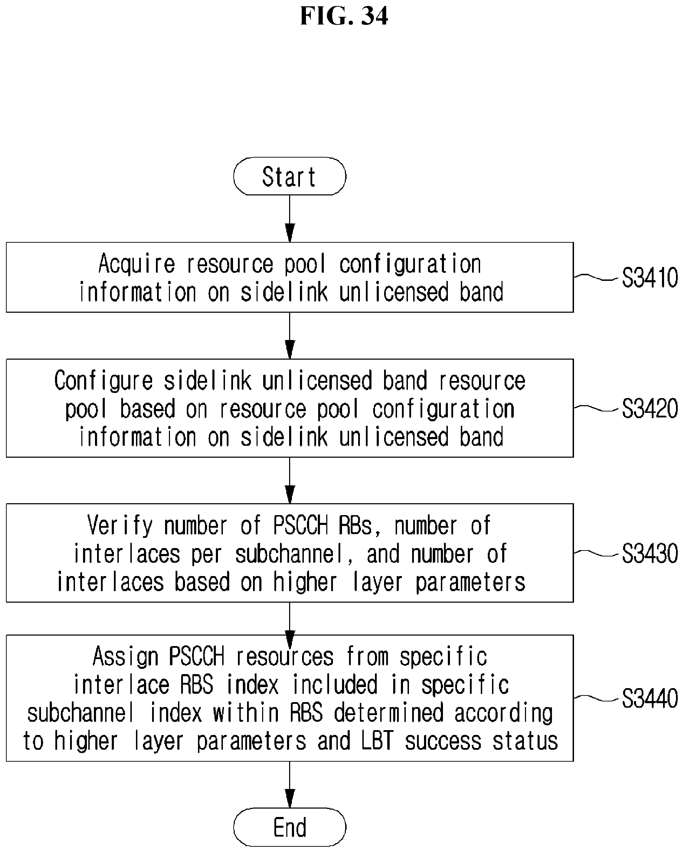

FIG. 34 is a flowchart illustrating a PSCCH resource assignment method applied to the present disclosure.

Referring to FIG. 34, a UE may acquire resource information on the sidelink unlicensed band of a single carrier bandwidth (S3410). Here, resource pool information for the sidelink unlicensed band may be provided to the UE based on at least one of RBS configuration/index information and interlace/subchannel-based configuration information. For example, the resource pool of the sidelink unlicensed band may be configured using interlace-based RB resources in consideration a CRB-to-sidelink interlace index mapping relationship. Also, the corresponding sidelink interlace(s) may be mapped to the subchannel. Then, the sidelink unlicensed band resource pool may be configured based on resource pool configuration information of the sidelink unlicensed band (S3420). Here, at least one RBS may be configured within the resource pool of the SL unlicensed band, and the LBT success status of each RBS may be verified. Also, the UE may verify the number of PSCCH RBs, the number of interlaces per subchannel (K), and the number of interlaces (M) based on higher layer parameters (S3430). Also, the UE may verify at least one of the number of PSCCH assignment units and an inconsecutive PSCCH RB configuration status based on higher layer parameters. Here, if configuration for the number of PSCCH assignment units is absent, the PSCCH may be assigned within a basically single subchannel (or single interlace) for the number of PSCCH assignment units, as described above. Also, for example, as described above, PSCCH RBs may be consecutively assigned or inconsecutively assigned to associated interlace RBs within a single subchannel based on the inconsecutive PSCCH RB configuration status. Here, if configuration for inconsecutive PSCCH RBs is absent, PSCCH RBs may be configured to be consecutively assigned to associated interlace RBs within a single subchannel as default configuration, but may not be limited thereto. PSCCH resources may be assigned from the lowest interlace RB index included in the lowest subchannel index within the RBS that succeeds in LBT. That is, the UE may assign PSCCH resources from a specific interlace RBS index included in the specific subchannel index within the RBS determined according to higher layer parameters and LBT success status (S3440). For example, RBSs for sidelink communication may be determined based on the LBT success status within the resource pool. Here, PSCCH resources may be assigned from the specific interlace RBS index included in the lowest subchannel index within the RBS determined according to higher layer parameters and LBT success status. As another example, PSCCH resources may be assigned from the specific interlace RBS index included in the highest subchannel index or an arbitrary subchannel index within the RBS determined according to higher layer parameters and LBT success status, and is not limited to a specific embodiment.

As still another example, PSCCH resources may be assigned to resources corresponding to the number of inconsecutive interlaces from the lowest interlace RB index included within the lowest subchannel index within the RBS. For example, PSCCH resources may be assigned to maintain equal spacing from associated interlace RBs present at both ends of frequency based on the specific subchannel index within the RBS. As another example, as described above, PSCCH resources may be assigned to consecutive interlace RBs starting from associated interlace RBs present at both ends of frequency based on the specific subchannel index within the RBS.

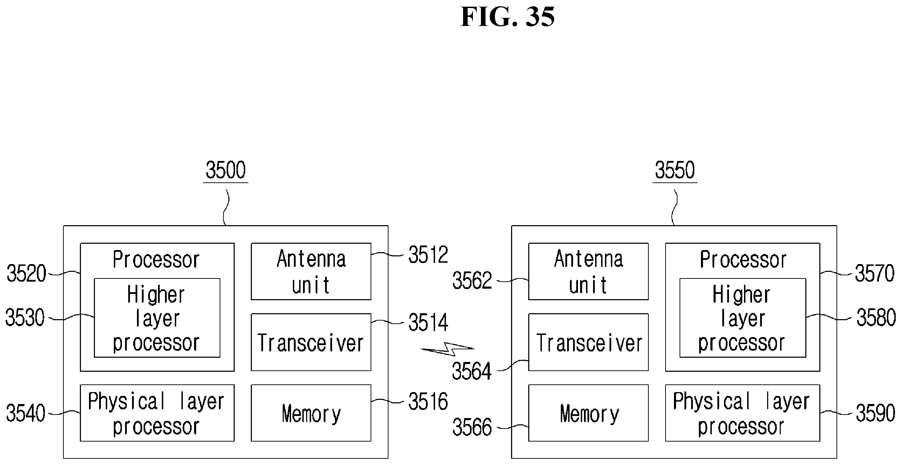

FIG. 35 is a diagram illustrating a base station apparatus and a UE apparatus to which the present disclosure may be applied.

The base station device 3500 may include a processor 3520, an antenna unit 3512, a transceiver 3514, and a memory 3516.

The processor 3520 performs a baseband-related signal processing and may include a higher layer processor 3530 and a physical layer processor 3540. The higher layer processor 3530 may process the operation of a medium access control (MAC) layer, a radio resource control (RRC) layer, or a higher layer thereof. The physical layer processor 3540 may process the operation of the physical (PHY) layer (e.g., uplink receive signal processing, downlink transmission signal processing). Also, to perform baseband-related signal processing, the processor 3520 may also control the operation of the base station device 3500 as a whole.

The antenna unit 3512 may include one or more physical antennas, and may support the multiple input multiple output (MIMO) transmission and reception in the case of including a plurality of antennas. Also, beamforming can be supported.

The memory 3516 may store computationally processed information of the processor 3520, software, operating systems, applications, and the like related to the operation of the base station device 3500, and may include components such as buffers.

The processor 3520 of the base station 3500 may be configured to implement the operation of the base station in the example described herein.

The UE device 3550 may include a processor 3570, an antenna unit 3562, a transceiver 3564, and a memory 3566. For example, herein, the UE device 3550 may perform communication with the base station device 3500. As another example, herein, the UE device 3550 may perform SL communication with another UE device. That is, the UE device 3550 used herein refers to a device capable of communicating with at least one of the base station device 3500 and the other UE devices and is not limited to communication with a specific device.

The processor 3570 performs baseband-related signal processing and may include a higher layer processor 3580 and a physical layer processor 3590. The higher layer processor 3580 may process the operation of the MAC layer, the RRC layer, or the higher layer. The physical layer processor 3590 may process the operations of the PHY layer (e.g., downlink receive signal processing, uplink transmission signal processing). Also, to perform baseband-related signal processing, the processor 3570 may also control the operation of the UE device 3550 as a whole.

The antenna unit 3562 may include one or more physical antennas, and may support MIMO transmission and reception in the case of including a plurality of antennas. Also, beamforming can be supported.

The memory 3566 may store computationally processed information of the processor 3570, software, operating systems, applications, and the like related to the operation of the UE device 3550, and may include components such as buffers.

The terminal device 3550 according to an example of the present disclosure may be associated with a vehicle. For example, the terminal device 3550 may be integrated in the vehicle, may be located in the vehicle, or may be located on the vehicle. Also, the terminal device 3550 according to the present disclosure may be the vehicle itself. Also, the terminal device 3550 according to the present disclosure may be at least one of a wearable terminal, AR/VR, an Internet of things (IoT) terminal, a robot terminal, and a public safety terminal. The terminal device 3550 to which the present disclosure may apply may include various types of communication devices that support an interactive service using sidelink, for services, for example, Internet access, service execution, navigation, real-time information, autonomous driving, and safety-and-risk diagnosis. Also, the terminal device 3550 may include an AR/VR device capable of performing a sidelink operation or any type of communication devices capable of performing a relay operation as a sensor.

Here, the vehicle to which the present disclosure applies may include an autonomous vehicle, a semi-autonomous vehicle, and a non-autonomous vehicle. Meanwhile, although the terminal device 3550 according to an example of the present disclosure is described in association with the vehicle, at least one of the UEs may not be associated with the vehicle. It is provided as an example only and should not be interpreted to limit application of the present disclosure.

Also, the terminal device 3550 according to an example of the present disclosure may include various types of communication devices capable of performing cooperation that supports an interactive service using sidelink. That is, the terminal device 3550 may directly support the interactive service using the sidelink and may be employed as a cooperation device for supporting the interactive service using the sidelink.

Also, the terminal device 3550 according to an example of the present invention may include various types of communication devices that may perform cooperation of supporting interactive services utilizing sidelink. That is, the terminal device 3550 may be utilized as a cooperative device not only in the case of supporting interactive services by directly utilizing sidelink but also for supporting interactive services utilizing sidelink. Also, for example, the terminal device 3550 may acquire resource information on a sidelink unlicensed band of a single carrier bandwidth. Here, resource pool information for the sidelink unlicensed band may be provided to the terminal device 3550 based on at least one of RBS configuration/index information and interlace/subchannel-based configuration information. Then, the sidelink unlicensed band resource pool may be configured based on resource pool configuration information of the sidelink unlicensed band. Here, at least one RBS may be configured within a resource pool of the SL unlicensed band and an LBT success status of each RBS may be verified. Then, PSCCH resources may be assigned to at least one RBS that succeeds in LBT and PSCCH transmission may be performed. Here, PSCCH resources may be assigned only to a single RBS as a specific RBS among at least one RBS that succeed in LBT. For example, the specific RBS may be an RBS with the lowest RBS index among the at least one RBS that succeed in LBT, but is not limited to a specific embodiment. That is, PSCCH resources may be included in only any one RBS among the RBSs that succeed in LBT. Through this, it is possible to prevent an increase in blind decoding an increase in power consumption.

As another example, PSCCH resource may be assigned to each of the at least one RBS that succeed in LBT. For example, the PSCCH resource may be determined based on a single RBS and the same PSCCH may be assigned to other RBSs through PSCCH duplication. Through this, it is possible to prevent an increase in blind decoding an increase in power consumption.

The terminal device 3550 may acquire resource information on the sidelink unlicensed band of a single carrier bandwidth. Here, resource pool information for the sidelink unlicensed band may be provided to the terminal device 3550 based on at least one of RBS configuration/index information and interlace/subchannel-based configuration information. For example, the resource pool of the sidelink unlicensed band may be configured using interlace-based RB resources in consideration a CRB-to-sidelink interlace index mapping relationship. Also, the corresponding sidelink interlace(s) may be mapped to the subchannel. Then, the sidelink unlicensed band resource pool may be configured based on resource pool configuration information of the sidelink unlicensed band. Here, at least one RBS may be configured within the resource pool of the SL unlicensed band, and the LBT success status of each RBS may be verified. Also, the terminal device 3550 may verify the number of PSCCH RBs, the number of interlaces per subchannel (K), and the number of interlaces (M) based on higher layer parameters. Also, the terminal device 3550 may verify at least one of the number of PSCCH assignment units and an inconsecutive PSCCH RB configuration status based on higher layer parameters. Here, if configuration for the number of PSCCH assignment units is absent, the PSCCH may be assigned within a basically single subchannel (or single interlace) for the number of PSCCH assignment units, as described above. Also, for example, as described above, PSCCH RBs may be consecutively assigned or inconsecutively assigned to associated interlace RBs within a single subchannel based on the inconsecutive PSCCH RB configuration status. Here, if configuration for inconsecutive PSCCH RBs is absent, PSCCH RBs may be configured to be consecutively assigned to associated interlace RBs within a single subchannel as default configuration, but may not be limited thereto. PSCCH resources may be assigned from the lowest interlace RB index included in the lowest subchannel index within the RBS that succeeds in LBT. That is, the terminal device 3550 may assign PSCCH resources from a specific interlace RBS index included in the specific subchannel index within the RBS determined according to higher layer parameters and LBT success status. For example, RBSs for sidelink communication may be determined based on the LBT success status within the resource pool. Here, PSCCH resources may be assigned from the specific interlace RBS index included in the lowest subchannel index within the RBS determined according to higher layer parameters and LBT success status. As another example, PSCCH resources may be assigned from the specific interlace RBS index included in the highest subchannel index or an arbitrary subchannel index within the RBS determined according to higher layer parameters and LBT success status, and is not limited to a specific embodiment.

As still another example, PSCCH resources may be assigned to resources corresponding to the number of inconsecutive interlaces from the lowest interlace RB index included within the lowest subchannel index within the RBS. For example, PSCCH resources may be assigned to maintain equal spacing from associated interlace RBs present at both ends of frequency based on the specific subchannel index within the RBS. As another example, as described above, PSCCH resources may be assigned to consecutive interlace RBs starting from associated interlace RBs present at both ends of frequency based on the specific subchannel index within the RBS.

Also, various embodiments of the present disclosure may be implemented by hardware, firmware, software, or combination thereof. In the case of implementation by hardware, the embodiments may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that the operations according to the method of various embodiments may be executed on an apparatus or a computer, and a non-transitory computer-readable medium storing such software or instructions to be executable on the apparatus or the computer.

Various embodiments of the present disclosure are to explain the representative aspects of the present disclosure rather than listing all the possible combinations and matters described in the various embodiments may be applied alone or in combination of two or more embodiments.

INDUSTRIAL APPLICABILITY

The above may also be applied to other systems.

**Claims**

1. A method of configuring a sidelink resource pool in a user equipment (UE) in a wireless communication system, the method comprising:

   receiving, by the UE, resource pool configuration information based on higher layer signaling from a base station;
   verifying a channel occupancy success status of at least one resource block set (RBS) within a resource pool based on the resource pool configuration information;
   performing physical sidelink control channel (PSCCH) transmission by assigning PSCCH resources within the at least one RBS based on the channel occupancy success status; and
   performing sidelink communication with another UE.

2. The method of claim 1, wherein, when the PSCCH resources are assigned within at least one RBS that succeed in channel occupancy based on the channel occupancy success status, the PSCCH resources are assigned within any one RBS among the at least one RBS that succeed in the channel occupancy.

3. The method of claim 1, wherein, when the PSCCH resources are assigned within at least one RBS that succeed in channel occupancy based on the channel occupancy success status, the PSCCH resources are assigned to each of the at least one RBS that succeed in the channel occupancy, and
   the PSCCH is duplicated and assigned to each of the at least one RBS that succeed in the channel occupancy.

4. The method of claim 1, wherein, when the PSCCH resources are assigned within the at least one RBS, the PSCCH resources are assigned to resources corresponding to the number of consecutive interlaces set from a lowest interlace RB included in a lowest subchannel within the RBS.

5. The method of claim 1, wherein, when the PSCCH resources are assigned within the at least one RBS, the PSCCH resources are assigned to resources corresponding to the number of inconsecutive interlaces set from a lowest interlace RB included in a lowest subchannel within the RBS.

# FIG. 1

| Downlink frame $i$ |
|:---:|

| Uplink frame $i$ |
|:---:|

$N_{TA} \, T_s$

# FIG. 2

One sub frame

$N_{\text{sub frame}}^{\text{symbols}\,\mu}$ OFDM symbols

$k = N_{RB}^{\mu}\, N_{sc}^{RB}\text{-}1$

Resource block

Resource element
-$(k,\bar{l})$in resource grid
-$(k,l)$in resource block

$N_{RB}^{\mu}\, N_{sc}^{RB}$ subcarriers

$N_{sc}^{RB}$ subcarriers

$l = 0$

$\bar{l} = 14 \cdot 2^{\mu}\text{-}1$

$k = 0$

# FIG. 3

# FIG. 4

EP 4 572 508 A1

| | | | | | C-V2X | |
|---|---|---|---|---|---|---|
| V2V | Reserved | Reserved | Tolling | Control | I2V | PVD/Security |
| CH 1 | CH 2 | CH 3 | CH 4 | CH 5 | CH 6 | CH 7 |

5,855　　5,865　　5,875　　5,885　　5,895　　5,905　　5,915　　5,925 MHz

**FIG. 5**

sl-TimeResource(length = $L_{bitmap}$)
(e.g.,0011111100)

Legend:
- SL BWP
- Excluded RB
- Reserved slot
- Excluded slot
- SSB slot

Frequency(RBs)

sl-RB-Number

sl-StartRBsubchannel →

sl-SubchannelSize

Time(slots)

$10240 \times 2^{\mu}$

EP 4 572 508 A1

# FIG. 6

| | 5150 | 5250 | 5350 | 5470 | 5750 | 5825 | 5925 | 6425 | 7125 | f(MHz) |

Korea: 17 dBm | DFS, TPC | 23 dBm DFS, TPC | (hatched)

China: DFS, TPC | DFS, TPC | 27 dBm

Japan: LBT | DFS, TPC, LBT | DFS, TPC, LBT

US: 30 dBm | DFS, TPC | (under study) | DFS, TPC | (under study) | (under study)

EU: LST | DFS, TPC, LBT | (under study) | DFS, TPC, LBT | (under study) | ITS | (under study)

Indoor, typ.23 dBm

Indoor or outdoor, typically 30 dBm

6 GHz band, under study

EP 4 572 508 A1

# FIG. 7

| U-NII-1 (100 MHz) | U-NII-2A (100 MHz) | U-NII-2B (120 MHz) | U-NII-2C (255 MHz) | U-NII-3 (100 MHz) | 25 MHz | U-NII-4 (75 MHz) |
|---|---|---|---|---|---|---|
| | | | | Part 15.247 Rules (125 MHz) | | |

5.150 GHz  5.250 GHz  5.350 GHz  5.470 GHz  5.725 GHz  5.850 GHz  5.925 GHz

# FIG. 8

EP 4 572 508 A1

**FIG. 9**

EP 4 572 508 A1

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$$

$$RB_{s,x}^{end,\mu} = N_{grid,x}^{start,\mu} + \begin{cases} N_{grid,x}^{size,\mu} & s = N_{RB-set,x}-1 \\ GB_{s,x}^{start,\mu} & otherwise \end{cases}$$

$$N_{BWP,i}^{size,\mu} = RB_{s1,uplink}^{end,\mu} - RB_{s0,uplink}^{start,\mu}$$

$$N_{BWP,i}^{start,\mu} = RB_{s0,uplink}^{start,\mu}$$

# FIG. 10

# FIG. 11

S1110

Wait until idle for
$T_d = 16 + m \cdot 9\mu s$

S1120

Initialize backoff
counter $N \in \{0, CW\}$

S1130

$N = 0$? → Y → Transmit

N

S1140

Decrement counter N

S1150

Channel idle
for $9\mu s$? → Y

N

S1160

Wait until idle for
$T_d = 16 + m \cdot 9\mu s$

**FIG. 12**

## FIG. 13

OFDM symbol

Cyclic extension

Uplink

$C_2 T_{symb} - T_{TA} - 16\ \mu s$

$T_{TA}$

Downlink

At device

Uplink

16 µs gap

Downlink

At gNB

EP 4 572 508 A1

# FIG. 14

Idle > 9 µs

<0.95Tx

Tx

<16 µs

DL  UL

Possible COT starting positions

# FIG. 15

EP 4 572 508 A1

**FIG. 16**

# FIG. 17

# FIG. 18

# FIG. 19

PSCCH Duplication

Interlace index

RBS#0 (LBT Success)　　1921　Guardband 1923　RBS#1 (LBT Success)　1922

0 1 2 3 • • • 0 1 2 3 • • • 0 1 2 3 • • • 0 1 2 3 • • • 0 1 2 3 • • • 0 1 2 3 • • • 0 1 2 3

PSCCH blind detection#0　　　　PSCCH blind detection#1

PSSCH transmission

1911 ▨ PSSCH
1912 ▨ PSCCH
1913 ▨ Duplicated PSCCH

EP 4 572 508 A1

# FIG. 20

# FIG. 21

# FIG. 22

(a)

(b)

**FIG. 23**

EP 4 572 508 A1

# FIG. 24

# FIG. 25

PSCCH RB
mapping order

RBS (LBT Success)

2510

# FIG. 26

(a)         (b)

**FIG. 27**

| 1st -stage SCI | 2nd -stage SCI  SL-SCH | HARQ feedback | S-MIB |
|---|---|---|---|
| PSCCH | PSCCH | PSFCH | PSBCH |
| (a) | (b) | (c) | (d) |

EP 4 572 508 A1

## FIG. 28

**FIG. 29**

FIG. 30

# FIG. 31

## FIG. 32

# FIG. 33

Start

Acquire resource pool configuration
information on sidelink unlicensed band ──S3310

Configure sidelink unlicensed band resource
pool based on resource pool configuration
information on sidelink unlicensed band ──S3320

△  ▷

Verify LBT success status for at least one
RBS within resource pool of sidelink
unlicensed band ──S3330

Transmit PSCCH through resources
within RBS that succeeds in LBT ──S3340

End

# FIG. 34

Start

↓

Acquire resource pool configuration information on sidelink unlicensed band — S3410

↓

Configure sidelink unlicensed band resource pool based on resource pool configuration information on sidelink unlicensed band — S3420

↓

Verify number of PSCCH RBs, number of interlaces per subchannel, and number of interlaces based on higher layer parameters — S3430

↓

Assign PSCCH resources from specific interlace RBS index included in specific subchannel index within RBS determined according to higher layer parameters and LBT success status — S3440

↓

End

# FIG. 35

## INTERNATIONAL SEARCH REPORT

| | International application No. |
|---|---|
| | **PCT/KR2023/011104** |

**A. CLASSIFICATION OF SUBJECT MATTER**

**H04W 74/08**(2009.01)i; **H04W 72/20**(2023.01)i; **H04W 72/54**(2023.01)i; **H04W 72/53**(2023.01)i; **H04L 5/00**(2006.01)i

According to International Patent Classification (IPC) or to both national classification and IPC

**B. FIELDS SEARCHED**

Minimum documentation searched (classification system followed by classification symbols)

H04W 74/08(2009.01); H04W 24/08(2009.01); H04W 72/02(2009.01); H04W 72/04(2009.01); H04W 74/00(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), 자원(resource), 채널점유(channel occupation), 상위레이어 (higher layer)

**C. DOCUMENTS CONSIDERED TO BE RELEVANT**

| Category* | Citation of document, with indication, where appropriate, of the relevant passages | Relevant to claim No. |
|---|---|---|
| Y | US 2020-0053704 A1 (ELECTRONICS AND TELECOMMUNICATIONS RESEARCH INSTITUTE) 13 February 2020 (2020-02-13)<br>See paragraphs [0069], [0078], [0079], [0096], [0111] and [0112]; and claims 1-20. | 1-2 |
| A | | 3-5 |
| Y | WO 2022-155468 A1 (OFINNO, LLC et al.) 21 July 2022 (2022-07-21)<br>See paragraphs [0209]-[0234]; and claims 1-15. | 1-2 |
| A | WO 2022-133395 A1 (QUALCOMM INCORPORATED) 23 June 2022 (2022-06-23)<br>See paragraphs [0078] and [0066]-[0089]; and claims 1-30. | 1-5 |
| A | US 2022-0104180 A1 (QUALCOMM INCORPORATED) 31 March 2022 (2022-03-31)<br>See paragraphs [0084]-[0095]; and claims 1-30. | 1-5 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 October 2023** | **30 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/011104**

### C. DOCUMENTS CONSIDERED TO BE RELEVANT

| Category* | Citation of document, with indication, where appropriate, of the relevant passages | Relevant to claim No. |
|---|---|---|
| A | EP 3442284 B1 (INDUSTRIAL TECHNOLOGY RESEARCH INSTITUTE) 09 December 2020 (2020-12-09)<br>See paragraphs [0053]-[0059]; and claims 1-32. | 1-5 |

Form PCT/ISA/210 (second sheet) (July 2022)

**INTERNATIONAL SEARCH REPORT**
Information on patent family members

International application No.

**PCT/KR2023/011104**

| Patent document cited in search report | | | Publication date (day/month/year) | Patent family member(s) | | | Publication date (day/month/year) |
|---|---|---|---|---|---|---|---|
| US | 2020-0053704 | A1 | 13 February 2020 | KR | 10-2020-0019085 | A | 21 February 2020 |
| | | | | US | 11197282 | B2 | 07 December 2021 |
| WO | 2022-155468 | A1 | 21 July 2022 | | None | | |
| WO | 2022-133395 | A1 | 23 June 2022 | CN | 116615952 | A | 18 August 2023 |
| | | | | KR | 10-2023-0117355 | A | 08 August 2023 |
| | | | | US | 11570820 | B2 | 31 January 2023 |
| | | | | US | 2022-0201760 | A1 | 23 June 2022 |
| | | | | US | 2023-0232460 | A1 | 20 July 2023 |
| US | 2022-0104180 | A1 | 31 March 2022 | CN | 116195227 | A | 30 May 2023 |
| | | | | EP | 4218193 | A1 | 02 August 2023 |
| | | | | WO | 2022-066562 | A1 | 31 March 2022 |
| EP | 3442284 | B1 | 09 December 2020 | CN | 109391671 | A | 26 February 2019 |
| | | | | CN | 109391671 | B | 27 July 2021 |
| | | | | EP | 3442284 | A1 | 13 February 2019 |
| | | | | TW | 201911906 | A | 16 March 2019 |
| | | | | TW | I660642 | B | 21 May 2019 |
| | | | | US | 10440687 | B2 | 08 October 2019 |
| | | | | US | 2019-0053194 | A1 | 14 February 2019 |

Form PCT/ISA/210 (patent family annex) (July 2022)